# EUROPÄISCHE PATENTSCHRIFT

(11) **EP 1 704 009 B1**
(45) Veröffentlichungstag und Bekanntmachung des Hinweises auf die Patenterteilung: **07.11.2007**
(21) Anmeldenummer: 05700920.1
(22) Anmeldetag: 14.01.2005
(51) Int. Cl.: B23B 29/02

(54) **SCHWINGUNGSGEDÄMPFTER WERKZEUGHALTER**
VIBRATION-DAMPED TOOL HOLDER
PORTE-OUTIL A OSCILLATIONS AMORTIES

(30) Priorität: 16.01.2004 DE 102004002453; 23.04.2004 DE 102004019869; 19.05.2004 DE 102004024745
(43) Veröffentlichungstag der Anmeldung: 27.09.2006
(73) Patentinhaber: Franz Haimer Maschinenbau KG, 86568 Hollenbach-Igenhausen (DE)
(72) Erfinder: HAIMER, Franz, 86568 Igenhausen (DE); HAIMER, Josef, 86568 Igenhausen (DE); KOPP, Hermann, 86571 Langenmosen (DE)
(74) Vertreter: Liska, Horst
(86) Internationale Anmeldenummer: PCT/EP2005/000321
(87) Internationale Veröffentlichungsnummer: WO 2005/068118

(56) Entgegenhaltungen:
- WO-A-03/093696
- DE-A- 3 409 581
- US-A- 2 835 023
- US-A- 3 642 378
- US-A- 3 663 116
- US-A- 3 859 699
- US-A- 4 871 286
- US-A- 4 998 851
- US-B1- 6 280 126

## Beschreibung

Die vorliegende Erfindung betrifft einen Werkzeughalter für ein um eine Drehachse drehbares Werkzeug, insbesondere Bohr-, Fräs-, Reib- oder Schleifwerkzeug, wobei der Werkzeughalter einen Spannschaft umfasst, welcher an seinem einen Endbereich eine Spannausbildung zur koaxialen Halterung des Werkzeugs und an seinem anderen Endbereich eine Kopplungsausbildung zur koaxialen Kopplung mit einer Werkzeugmaschine aufweist.

Derartige Werkzeughalter sind beispielsweise als Spannfutter oder Spanndorne bei Bohr-, Fräs-, Reib- oder Schleifmaschinen, d.h. allgemein bei Maschinen zur spanabhebenden Bearbeitung mit rotierenden geometrisch bestimmten oder unbestimmten Schneiden, allgemein bekannt. Die Spannausbildung kann eine zur Drehachse zentrische Aufnahmeöffnung zur Aufnahme eines Halteschafts des Werkzeugs aufweisen, wobei am Umfangsmantel der Aufnahmeöffnung wenigstens eine Spannfläche zur Halterung eines Halteschafts des Werkzeugs vorgesehen sein kann. Die bekannten Werkzeughalter weisen in der Regel eine gewisse axiale Länge auf, was sie grundsätzlich anfällig für fremderregte Schwingungen macht, welche von vielerlei Quellen erregt werden können.

Beispielsweise weisen zahlreiche Schneidwerkzeuge, welche zur Einspannung in einen derartigen Werkzeughalter vorgesehen sind, an ihrer Außenfläche wenigstens eine Schneide oder über ihren Umfang gleichmäßig verteilt eine Mehrzahl von Schneiden auf, so dass bei einer Werkzeugumdrehung periodisch wenigstens eine Schneide in den Werkstückkörper eintritt, um aus diesem einen Span abzuheben. Mit einem derartigen Schneideneintritt in das Material ist eine Kraftrückwirkung auf die Schneide verbunden, da diese mehr oder weniger schlagartig von einem nichtschneidenden in einen schneidenden Zustand übergeht. Die Periodizität derartiger Kraftstöße hängt dabei von der Anzahl- an vorhandenen Schneiden und der Umdrehungszahl des Werkzeugs und damit des Werkzeughalters ab. Es sind jedoch auch andere Schwingungseinflüsse bekannt; wie sie etwa durch eine für ein jeweiliges Werkzeug unangepasste Schneidgeschwindigkeit erhalten werden, beispielsweise durch Rattern eines Fräsers.

Durch diese Einflüsse kann der Werkzeughalter zu Torsionsschwingungen um seine ideale Drehachse oder/und zu Transversälschwingungen in einer die Drehachse enthaltenden Ebene angeregt werden. Auch Mischformen derartiger Schwingungen treten auf.

Aus DE 34 09 581 A1 ist ein Werkzeughalter bekannt, dessen mit einer Werkzeugmaschine zu verbindender Kupplungszylinder einen Gewindeschaft trägt, der über eine hülsenförmige Spannmutter mit einem Gewindeschaft eines Rotationswerkzeugs, beispielsweise einem Fräser, verschraubt ist. Zwischen dem Kupplungszylinder und der Spannmutter ist eine den Gewindeschaft umschließende Keramikhülse auf Druck verspannt angeordnet. Die Hülse soll Vibrationsschwingungen des Werkzeughalters mindern.

Es ist Aufgabe der vorliegenden Erfindung, einen Werkzeughalter anzugeben, welcher allgemein gegenüber herkömmlichen Werkzeughaltern weniger anfällig für eine unerwünschte Schwingungsanregung ist und damit verbunden höhere Bearbeitungsgenauigkeiten erreicht.

Ausgehend von dem in DE 34 09 581 A1 beschriebenen Stand der Technik wird diese Aufgabe durch die in Anspruch 1 angegebenen Merkmale gelöst.

Gemäß der vorliegenden Erfindung kann die Verspannungskraft in einer beliebigen Richtung auf den Werkzeughalter ausgeübt werden, solange sie eine in axialer Richtung, d. h. in Richtung der Drehachse, wirkende Verspannungskraftkomponente aufweist. Es wird von Fachleuten jedoch verstanden werden, dass die mit einer erfindungsgemäßen Verspannungsanordnung erzielbare Wirkung umso größer ist, je größer der Anteil der in axialer Richtung wirkenden Verspannungskraftkomponente an der Gesamtverspannungskraft ist.

Bei der Kupplungsausbildung kann es sich um jeden Typ einer herkömmlichen Werkzeughalterkupplung wie z.B. einen Steilkegel-Kupplungsschaft oder eine Hohlschaftkupplung (HSK-Kupplung) handeln. Auch kann es sich bei der Spannausbildung gleichfalls um jeden Typ einer Werkzeugspanneinrichtung handeln, wie z.B. eine Schrumpffutter-Aufnahme, eine Werkzeugaufnahme für einen Zylinderschaft mit einer Spannschraube beispielsweise vom Weldon-Typ oder Whistle-Notch-Typ. Geeignet sind aber auch Spannzangenfutter oder sogenannte Kombiaufnahmen oder Messerkopfaufnahmen.

Die axiale Verspannungskraftkomponente bewirkt in dem axialen Verspannungsabschnitt eine mechanische Axialspannung, welche die Federeigenschaften des Werkzeughalters, insbesondere dessen Federhärte in dem Axialabschnitt und damit des Werkzeughalters insgesamt gegenüber dem mechanisch unverspannten Zustand ändert, vorzugsweise erhöht. Durch Aufbringen der Axialspannung kann somit die Federsteifigkeit des Werkzeughalters insgesamt und damit verbunden die am Werkzeughalter besonders einfach anregbaren Schwingungsformen und ihre zugeordneten Resonanzfrequenzen gezielt verändert, insbesondere erhöht werden. Wie allgemein bekannt ist, bestimmt sich die Resonanzfrequenz eines Bauteils, wie z.B. eines Werkzeughalters, aus der Quadratwurzel des Quotienten aus Federsteifigkeit und Masse. Durch die gezielte Änderung der Federsteifigkeit kann sowohl das Torsionsschwingungsverhalten, d.h. eine Schwingung des Werkzeughalters um eine Drehachse herum betreffend, als auch das Transversalschwingungsverhalten, d.h. eine Schwingung des Werkzeughalters in einer die Drehachse enthaltenden Ebene mit einer Schwingungsauslenkung des Werkzeughalters orthogonal zur Drehachse betreffend, gezielt beeinflusst werden. Auch hat sich gezeigt, dass bei hohen mechanischen Spannungen im elastischen Bereich metallischer Materialien im Einzelfall die Dämpfung ansteigen kann.

Die mechanische Axialspannung, die auf den Werkzeughalter durch die Hülse der Verspannungsanordnung aufgebracht wird, kann eine Zugspannung oder eine Druckspannung sein. Der Verspannungsabschnitt ist hierbei bevorzugt in axialer Richtung zwischen der Spannausbildung und der Koppelausbildung angeordnet, insbesondere dann, wenn die Spannausbildung über die Hülse vorsteht und für eine Schrumpfsitzhalterung des Werkzeugs ausgebildet ist. Durch diese Maßnahmen wird erreicht, dass die Koppelausbildung und die Spannausbildung hinreichend steif ausgebildet werden können und die Spannausbildung gegebenenfalls für das Ein- und Ausschrumpfen des Werkzeugs für induktive Heizgeräte zugänglich ist.

In einer ersten Variante ist vorgesehen, dass die Hülse an ihren Enden voneinander weg auf Zug belastbar an dem Werkzeughalter abgestützt ist und der Spannschaft die Koppelausbildung auf Druck belastbar mit der Spannausbildung verbindet.

Alternativ kann die Hülse aber auch an ihren Enden aufeinander zu auf Druck belastbar an dem Werkzeughalter abgestützt sein und der Spannschaft kann einen Schaftabschnitt umfassen, der die Koppelausbildung auf Zug belastbar mit der Spannausbildung verbindet.

Für die auf Zug oder Druck belastbare Abstützung der Hülse können an dem Werkzeughalter geeignete Ringschultern vorgesehen sein. Die Hülse kann aber auch an einem oder an ihren beiden Enden fest mit dem Werkzeughalter beispielsweise durch Schweißen oder Löten oder dergleichen verbunden sein. Es versteht sich, dass die Hülse aber auch einstückig integral mit der Koppelausbildung oder/und der Spannausbildung verbunden sein kann. Feste Verbindungen dieser Art führen zu langlebigen, hochbelastbaren Werkzeughaltern. Insbesondere kann die nachträgliche feste Verbindung zum Beispiel durch Schweißen oder dergleichen während des Verspannungsvorgangs aufgebracht werden, was die Konstruktion des Werkzeughalters beträchtlich vereinfacht.

Zweckmäßigerweise ist der Werkzeughalter so ausgebildet, dass die Verspannungskraft veränderbar ist, so dass durch die Verspannungskraft je nach Anwendungsfall, d.h. unter Berücksichtigung der Anzahl von an einem Schneidwerkzeug vorhandenen Schneiden, der Drehzahl des Werkzeughalters usw., eine unerwünschte Schwingungsanregung vermindert werden kann. Für die Veränderung der Verspannungskraft kann der Abstützweg der Hülse oder des Schaftabschnitts des Spannschafts über eine axiale Schraubverbindung geführt sein. Anstelle der Schraubverbindung können aber auch Presssitzverbindungen vorgesehen sein, die durch externe axiale Druckkräfte eine axiale Justierung erlauben. Schließlich kann auch eine hydraulisch wirkende Druckkammer in dem Abstützweg vorgesehen sein, in welcher der Hydraulikdruck zur Änderung der Verspannkraft einstellbar ist.

Der Spannschaft oder/und die Hülse müssen drehfest mit der Kopplungsausbildung und der Spannausbildung verbunden sein, um das Antriebsdrehmoment der Werkzeugmaschine auf das Werkzeug übertragen zu können. Bezogen auf seine Drehachse soll der Werkzeughalter biegesteif sein. Dies lässt sich bei hinreichenden Dämpfungseigenschaften erreichen, wenn die Hülse an einer die Spannausbildung aussteifenden Ringschulter der Kopplungsausbildung, insbesondere einem radial abstehenden Ringbund der Kopplungsausbildung abgestützt bzw. mit dieser Ringschulter verbunden ist. Die Ringschulter steift den kopplungsseitigen Bereich der Hülse aus. Da der Außendurchmesser der Ringschulter in aller Regel größer ist als der Außendurchmesser der Spannausbildung, kann der Außen- oder/und Innendurchmesser der Hülse an ihrem der Kopplungsausbildung benachbarten Ende bezogen auf das andere Ende vergrößert werden. Die sich auf diese Weise ergebende, angenähert konische Form der Hülse verbessert die Biegesteifigkeit des Werkzeughalters.

Der von der Hülse umgebene Schaftabschnitt des Spannschafts kann gleichfalls Hülsenform haben. Insbesondere kann die Hülse auch für sich genommen mehrere koaxial zueinander angeordnete Hülsenmäntel umfassen, die zumindest in einem Teilabschnitt ihrer axialen Länge reibschlüssig aneinander anliegen können. Die so entstehende Reibung wirkt dämpfend auf die sie hervorrufenden Schwingungsbewegungen. Auch kann einer der Hülsenmäntel auf Druck und der andere der Hülsenmäntel auf Zug beansprucht sein, so dass der innere Hülsenmantel die Funktion des Schaftabschnitts des Spannschafts mit übernimmt.

Weiterhin kann die Hülse zumindest jedoch wenigstens einer ihrer Hülsenmäntel, an wenigstens einem axialen Endbereich, vorzugsweise an beiden axialen Endbereichen, unter Zwischenanordnung eines Dämpfungsstücks an dem Werkzeughalter anliegen. Durch den Anlageeingriff wird wiederum eine Mikro-Relativbewegung zwischen Hülse und Dämpfungsstück oder/und zwischen Dämpfungsstück und Werkzeughalter ermöglicht, so dass unerwünschte Relativbewegungen zwischen Werkzeughalter und Hülse abgedämpft werden. Auch dies verhindert die Entstehung einer unerwünschten Schwingung. Darüber hinaus sorgt das Dämpfungsstück dafür, dass Schläge auf den Werkzeughalter abgedämpft werden, wie sie etwa von einer spanenden Werkstückbearbeitung herrühren können. Dies gilt nicht auch bei einer über ein bloßes Anliegen hinausgehenden Verbindung von Hülse und Dämpfungsstück oder/und von Dämpfungsstück und Werkzeughalter.

Alternativ oder zusätzlich kann der Werkzeughalter jedoch auch so ausgebildet sein, dass radial zwischen der Hülse und dem Schaftabschnitt ein Ringraum gebildet ist, der mit einem unter Druck stehenden Material, insbesondere einem fließfähigen Material oder einem plastisch verformbaren oder elastischen Material ausgefüllt ist. Bevorzugt sind Druckveränderungsmittel vorgesehen, mittels der der Druck des Materials in dem Ringraum veränderbar ist. Das unter Druck stehende Material beeinflusst nicht nur die axiale Verspannungskraft, sondern kann auch bei innerer Reibung die Dämpfungswirkung erhöhen. Bei den Druckveränderungsmitteln kann es sich um Mittel zur Veränderung des Raumvolumens handeln, beispielsweise um eine in das Raumvolumen hinein verlagerbare Stellschraube oder/und einen verlagerbaren Kolben.

Die vorangegangen erläuterte Verspannungsanordnung ändert die Federcharakteristik des im Betrieb sowohl Drehschwingungen als auch Biegeschwingungen ausgesetzten Werkzeughalters und damit dessen Schwingungsverhalten. Im Einzelfall kann bereits die Änderung des Schwingungsverhaltens zu einer Verbesserung der Schneideigenschaften des Werkzeugs und damit zu einer Verbesserung seiner Standzeit im Betrieb führen. Eine wesentliche Verbesserung der Dämpfungseigenschaften des Werkzeughalters lässt sich jedoch erreichen, wenn dem Werkzeughalter Energie absorbierende oder Energie verzehrende Mittel zugeordnet sind. In einer bevorzugten Ausgestaltung der Erfindung ist vorgesehen, dass die die Vorspannkraft erzeugende Hülse zumindest auf einem Teilbereich ihrer axialen Länge reibschlüssig am Umfang des Spannschafts anliegt. Die lediglich an ihren axialen Enden mit dem Werkzeughalter verbundene Hülse bewegt sich bei Dreh- oder Biegeschwingungen des Spannschafts relativ zu diesem und dämpft durch ihren Reibschluss diese Schwingungen. Der Reibschluss kann durch eine Übermaß-Bemessung der aneinander liegenden Umfangsflächen des Spannschafts einerseits und der Hülse andererseits realisiert sein, beispielsweise in einer Ausgestaltung, in welcher die Hülse den Spannschaft umschließt durch ein radiales Übermaß des Außendurchmessers des Spannschafts bezogen auf den Innendurchmesser der Hülse. Die für den Reibschluss erforderlichen radialen Kräfte können aber auch anderweitig erzeugt werden, beispielsweise indem elastisches Material zwischen die sich radial gegenüberliegenden Umfangsflächen des Spannschafts einerseits und der Hülse andererseits eingepresst wird.

Es hat sich herausgestellt, dass der Reibschlussabschnitt sich nicht über die gesamte axiale Länge der Hülse erstrecken muss, dass es vielmehr genügt, den Reibschluss auf einen Teilabschnitt der Hülse, insbesondere im Bereich eines ihrer axialen Enden zu begrenzen, so dass die verbleibende axiale Länge der Hülse für die federnde axiale Verspannung ausgenutzt werden kann. In einer bevorzugten, konstruktiv besonders einfachen Ausführungsform wird das letztgenannte Prinzip zugleich zur axialen Abstützung der Hülse an dem Spannschaft ausgenützt. Die mit ihren beiden Enden axial vorgespannt an dem Werkzeughalter abgestützte Hülse ist mit ihrem der Spannausbildung axial nahen Ende bevorzugt in einem Reibschlussabschnitt im Presssitz reibschlüssig an dem Spannschaft gehalten. Die axiale Länge des Reibschlussabschnitts ist so bemessen, dass er auch die axiale Vorspannkraft der Hülse aufzunehmen vermag, jedoch zum anderen Ende der Hülse hin seine reibungsdämpfenden Eigenschaften entfalten kann.

Bei der Montage der Hülse auf dem Spannschaft des Werkzeughalters wird die Hülse zum Beispiel in einer Pressvorrichtung unter Überwindung des Presssitzes auf Druck vorgespannt. Um die Hülse nicht über die gesamte axiale Höhe des Reibschlussabschnitts unter Presssitzbedingungen aufschieben zu müssen, haben die Hülse und der Spannschaft zumindest in einem Teil des Reibschlussabschnitts aneinander angepasst geringfügig konische Form, beispielsweise bei einer Steigung von etwa 0,1. Eine solche Konusform ist selbsthemmend. Es versteht sich aber, dass der Reibschlussabschnitt für sich, aber auch wenn er Presssitzbedingungen erfüllt, auch durch Zylinderflächen gebildet sein kann.

Mit ihrem anderen Ende stützt sich die solchermaßen unter DruckVorspannung auf den Spannschaft aufgezogene Hülse an einer Ringschulter des Werkzeughalters, insbesondere an einer Ringschulter der Kopplungsausbildung axial ab. In diesem Zusammenhang hat es sich als zweckmäßig herausgestellt, das an der Ringschulter abgestützte Ende der Hülse als Konusabschnitt auszubilden, der sich von der Ringschulter weg axial verjüngt und so zusätzlich für eine Aussteifung des der Kopplungsausbildung benachbarten Fußes des Spannschafts sorgt.

Wie bereits erwähnt verläuft die axial auf Druck vorgespannte Hülse zweckmäßigerweise axial zwischen dem Reibschlussabschnitt und dem axial der Kopplungsausbildung zugewandten, an dem Werkzeughalter abgestützten anderen Ende mit radialem Abstand von dem Spannschaft, um die Hülse in ihrem die Vorspannung erzeugenden Abschnitt beweglich zu machen. Axial zwischen dem Reibschlussabschnitt und dem am Werkzeughalter abgestützten anderen Ende kann wenigstens ein Dämpfungsring aus einem elastisch komprimierbaren Material zwischen dem Umfang des Spannschafts und dem Innenmantel der Hülse angeordnet sein, so dass auch dieser Bereich der Hülse zur Energie absorbierenden Schwingungsdämpfung mit ausgenutzt werden kann. Beispielsweise kann ein solcher Dämpfungsring in dem vorstehend erwähnten Konusabschnitt der Hülse untergebracht sein.

In einer weiteren bevorzugten Ausgestaltung ist vorgesehen, dass die axialen Enden der Hülse zugfest und dicht mit dem Werkzeughalter verbunden, insbesondere reibverschweißt sind, wobei die Hülse den Spannschaft mit radialem Abstand umschließt, so dass zwischen der Hülse und dem Spannschaft eine nach außen abgedichtete Ringkammer entsteht. Für die axiale Verspannung wird in diese Kammer unter Druck ein deformierbares und bei Deformation Schwingungsenergie absorbierendes Material eingeführt, beispielsweise eingespritzt, welches zumindest während des Füllvorgangs fließfähig oder deformierbar ist und dann unter Aufrechterhaltung des Drucks seine Konsistenz ändert. Geeignet sind beispielsweise fließfähige Gummimischungen, die in der Ringkammer ausvulkanisieren oder aber härtbare Kunststoffsubstanzen, die in der Ringkammer zu einem steifelastischen Ringkörper aushärten. Geeignet sind auch in der Ringkammer sinterbare Materialien, wie zum Beispiel Keramikmaterialien. Die vorstehend erläuterten Dämpfungsmaterialien können Füllstoffe enthalten, die die mechanische Festigkeit oder Steifigkeit des Dämpfungsmaterials erhöhen.

In einer weiteren Variante, die auf dem Prinzip hydraulischer Druckerzeugung für die axiale Verspannung der Verspannungsanordnung beruht, ist vorgesehen, dass die Hülse mit ihren beiden Enden axial an dem Werkzeughalter abgestützt ist, wobei im Abstützweg eines der beiden Enden der Hülse eine relativ zu dem Werkzeughalter axial bewegliche Stützeinrichtung angeordnet ist, die wenigstens einen Stützkolben aufweist, der in einer ihm zugeordneten, ein fließfähiges oder plastisch deformierbares Druckmedium enthaltenden Druckkammer axial verschiebbar geführt ist, wobei der Druckkammer ein Einstellelement zur Veränderung des Drucks in dem Druckmedium zugeordnet ist. Die Druckkammer ist aus Platzbedarfsgründen bevorzugt auf der Seite der Kopplungsausbildung des Werkzeughalters angeordnet und kann eine Vielzahl in Umfangsrichtung verteilter, axial beweglicher Kolben umfassen, die am Umfang verteilt auf das benachbarte Ende der Hülse wirken. Die Kolben sind zweckmäßigerweise in gesonderten, jedoch für das Druckmedium kommunizierenden Druckkammern angeordnet. Vorzugsweise handelt es sich jedoch bei dem Stützkolben um einen zur Drehachse zentrischen Ringkolben, der in einem die Druckkammer bildenden Ringraum axial verschiebbar ist. Der Ringkolben kann von der Hülse gesondert sein; er kann aber auch einteilig mit ihr verbunden sein.

Bei dem Druckmedium kann es sich um Hydrauliköl oder eine sonstige nicht komprimierbare Flüssigkeit handeln. Geeignet sind aber auch fließfähige, plastische Materialien, wie zum Beispiel gummiartige oder fließfähige Kunststoffe oder visko-elastische Massen.

Bei dem Einstellelement kann es sich auch hier um eine auf das Druckmedium einwirkende Kolbenschraube oder dergleichen handeln.

Das andere der beiden Enden der Hülse kann fest mit dem Spannschaft verbunden sein, beispielsweise angeschweißt oder angeklebt sein. Vorzugsweise ist jedoch am Ringbund für die Abstützung des anderen Endes der Hülse ein lösbar an dem Spannschaft gehaltener Sicherungsring vorgesehen. Bei dem Sicherungsring kann es sich um eine auf den Spannschaft aufgeschraubte Mutter oder aber um einen radial elastisch in eine Ringnut des Spannschafts eingeschnappten Federring handeln.

Es versteht sich, dass durch geeignete Wahl der Wandstärke der Hülse deren Federeigenschaften optimiert werden können. Auch durch geeignete Gestalt der Hülse können die Federeigenschaften beeinflusst werden. Beispielsweise kann die Hülse einen axial federnden Wellfederabschnitt umfassen.

Zur Verminderung von unerwünschterweise auftretenden Schwingungen kann an dem Werkzeughalter ein Schwingmassenstück vorgesehen sein, welches durch destruktive Resonanz eine unerwünschte Schwingung am Werkzeughalter mindert oder gar auslöscht. Vorzugsweise ist das Schwingmassenstück in axialer Richtung am Werkzeughalter verschiebbar angeordnet, so dass seine Resonanzfrequenz auf die Resonanzfrequenz des Werkzeughalters abstimmbar ist. Das Schwingmassenstück ist bevorzugt am Schaft des Werkzeughalters vorgesehen, da an diesem sich die unerwünschten Schwingungsformen bevorzugt ausbilden. Darüber hinaus kann das Schwingmassenstück durch die zuvor erwähnte Hülse eingekapselt sein, etwa wenn diese den Schaft radial außen umgibt. Dadurch ist das Schwingmassenstück vor äußeren Einflüssen, wie etwa Späneanfall und Kühlmittel, geschützt.

In einer weiteren bevorzugten Ausgestaltung ist vorgesehen, dass die Hülse den Schaftabschnitt zumindest in einem Teilbereich ihrer axialen Länge unter Bildung eines Ringraums mit radialem Abstand umschließt und in dem Ringraum ein ringförmiges, an der inneren Umfangsfläche der Hülse und der äußeren Umfangsfläche des Schaftabschnitts flächig anliegendes Dämpfungselement radial vorgespannt angeordnet ist. Ein solches Dämpfungselement sorgt für einen definierten Reibschluss zwischen sich und der Hülse einerseits bzw. dem Schaftabschnitt andererseits und sorgt damit für eine Reibungsdämpfung. Das Dämpfungselement kann aus im Wesentlichen steifen Material bestehen, besteht aber bevorzugt aus elastischem oder plastischem Material, so dass auch die innere Reibung dieses Materials zur Dämpfung beiträgt, selbst wenn das Dämpfungselement drehfest mit den Umfangsflächen der Hülse bzw. des Schaftabschnitts verbunden sein sollte. Das Dämpfungselement kann unter Komprimierung in den Ringraum eingepresst sein. Bevorzugt ist der Ringraum jedoch durch Ringschultern axial begrenzt, zwischen welchen das Dämpfungselement zur Erzeugung der radialen Vorspannung axial verspannt ist. Durch Verändern des axialen Abstands der Ringschultern kann die Vorspannung des Dämpfungselements variiert werden. Hierzu kann beispielsweise eine der Ringschultern durch eine an der Kopplungsausbildung gehaltene, axial verlagerbare Schraubanordnung gebildet sein. Bevorzugt hat der Ringraum Konusform, so dass auch bei relativ steifen Materialien eine Änderung der radialen Verspannung des Dämpfungselements erreicht werden kann.

Allgemein gesehen hat es sich als besonders vorteilhaft erwiesen, wenn die beiden Komponenten, d.h. der Spannschaft einerseits und die Verspannungsanordnung andererseits aus unterschiedlichen Materialien bestehen, da Vibrationen sich besser dämpfen lassen, wenn sie Bereiche aus verschiedenen Werkstoffen durchlaufen müssen. Eine der Komponenten, insbesondere die Hülse, besteht zweckmäßigerweise aus Hartmetall. Das Hartmetall kann feinkörnig sein, zum Beispiel vom Typ K20, aber auch grobkörnig, zum Beispiel vom Typ K50, nachdem grobkörnigere Hartmetalle höhere Festigkeit und geringere Sprödigkeit haben. Geeignet sind auch Schwermetalle oder Metall-Matrix-Komposite-Materialien (MMC-Materialien), wie zum Beispiel Ferro-Titanit. Weiter geeignet sind Keramikmaterialien, aber auch Kunststoffe, insbesondere Glasfaser- oder Kohlefaser-verstärkte Kunststoffe.

Vorangegangen wurden Ausführungsformen erläutert, bei welchen die beiden Komponenten, d.h. der Spannschaft und die Verspannungsanordnung, einteilig, gegebenenfalls durch Schweißen, miteinander verbunden sind. Als besonders günstig haben sich aber auch Ausführungsformen erwiesen, bei welchen eine der beiden Komponenten - Spannschaft und Verspannungsanordnung - über wenigstens eine die axiale Verspannkraft übertragende Fuge an der anderen der beiden Komponenten abgestützt ist. Fugen haben unterschiedliches Kraftübertragungsverhalten, je nachdem, ob ihre aneinander liegenden Flächen auf Zug oder auf Druck beansprucht werden, und sorgen damit auf Grund dieser Unsymmetrie der Kraftübertragung für Vibrationsminderungen. Die Fuge kann dabei zwischen zwei in radialem Presssitz aneinander liegenden Umfangsflächen der beiden Komponenten und/oder zwischen zwei axial aneinander liegenden Flächen der beiden Komponenten vorgesehen sein. Gegebenenfalls kann zwischen den beiden die Fuge bildenden Flächen eine Dämpfungsmaterialschicht angeordnet sein.

Als wesentlich hat es sich für die Minderung von Vibrationen herausgestellt, wenn die beiden Komponenten im Bereich der Fuge relativ zueinander radial zentriert sind, wobei vorzugsweise ein gewisser leichter Presssitz zwischen den zentrierenden Umfangsflächen vorhanden sein sollte. Zumindest eine der beiden axialen Stirnenden der die Hülse bildenden Komponenten sollte eine der aneinander liegenden Flächen der Fuge bilden, und an der anderen der beiden Komponenten ist zweckmäßigerweise eine Umfangsfläche angeformt oder angebracht, die die Hülse im Bereich dieses Stirnendes radial zentriert. Zweckmäßigerweise sind beide Stirnenden der Hülse in dieser Art radial zentriert.

Die Hülse kann an ihrer radial inneren Umfangsfläche zentriert sein. Insbesondere das der Spannausbildung benachbarte axiale Stirnende der Hülse ist jedoch zweckmäßigerweise auf seiner radial äußeren Umfangsfläche zentriert, da Wärmedehnungen der Spannausbildung dann dieses Stirnende der Hülse nicht auf Druck beanspruchen. Speziell bei Schrumpffutter-Ausbildungen kann die Aufweitung des Stirnendes der Hülse durch das wärmedehnende Schrumpffutter zu Schäden an der Hülse führen, speziell dann, wenn sie aus einem spröden Material, wie zum Beispiel Keramik oder dergleichen, besteht. Auch das der Kopplungsausbildung benachbarte Stirnende der Hülse ist zweckmäßigerweise auf seiner äußeren Umfangsfläche zentriert, da auf diese Weise Spreizkräfte, die sich beispielsweise durch die konische Form der Hülse ergeben können, durch die außen liegende Zentrierung aufgefangen werden können.

Die außen liegenden, zentrierenden Umfangsflächen können einteilig integral an der die Hülse außen umschließenden Komponente angeformt sein. Allerdings ist die präzise Fertigung einer innen liegenden Passung an dieser Komponente auf Grund der dort vorhandenen Hinterschneidung aufwändig. Einfacher herzustellen ist eine Ausführungsform, bei der die die Hülse im Bereich zumindest eines ihrer Stirnenden, insbesondere im Bereich ihres der Spannausbildung benachbarten Stirnendes radial außen umschließende Umfangsfläche der anderen der beiden Komponenten durch einen die Fuge axial überdeckenden, auch die andere Komponente radial außen umschließenden Ring gebildet ist. Die innen liegende Passungsfläche eines solchen Rings ist vergleichsweise einfach zu fertigen.

Im Folgenden werden Ausführungsbeispiele der Erfindung anhand von Zeichnungen näher erläutert. Hierbei zeigen:
Die Fig.1 bis 4 Axiallängsschnitte durch schwingungsgedämpfte Werkzeughalter mit axial auf Zug verspannter Hülse;
Fig. 5 bis 10 Axiallängsschnitte durch schwingungsgedämpfte Werkzeughalter mit axial auf Druck verspannter Hülse;
Fig. 11 und 12 Axiallängsschnitte durch schwingungsgedämpfte Werkzeughalter mit Tilgermasse;
Fig. 13 einen Axiallängsschnitt durch einen Werkzeughalter mit einstellbarer Dämpfung;
Fig. 14 und 15 Axiallängsschnitte durch Varianten eines Werkzeughalters mit auf Druck vorgespannter Hülse;
Fig. 16 einen Axiallängsschnitt durch eine Variante eines Werkzeughalters mit auf Zug beanspruchter Hülse;
Fig. 17 einen Axiallängsschnitt durch einen Werkzeughalter mit elektrisch steuerbarer Dämpfung;
Fig. 18 bis 22 Axiallängsschnitte durch Werkzeughalter mit Reibschlussdämpfung;
Fig. 23 und 24 Axiallängsschnitte durch Werkzeughalter mit einstellbarer Dämpfung;
Fig. 25 einen Axiallängsschnitt durch einen Werkzeughalter mit eingebauten Dämpfungselementen und
Fig. 26 bis 28 Axiallängsschnitte durch Werkzeughalter mit vibrationsmindernden Eigenschaften.

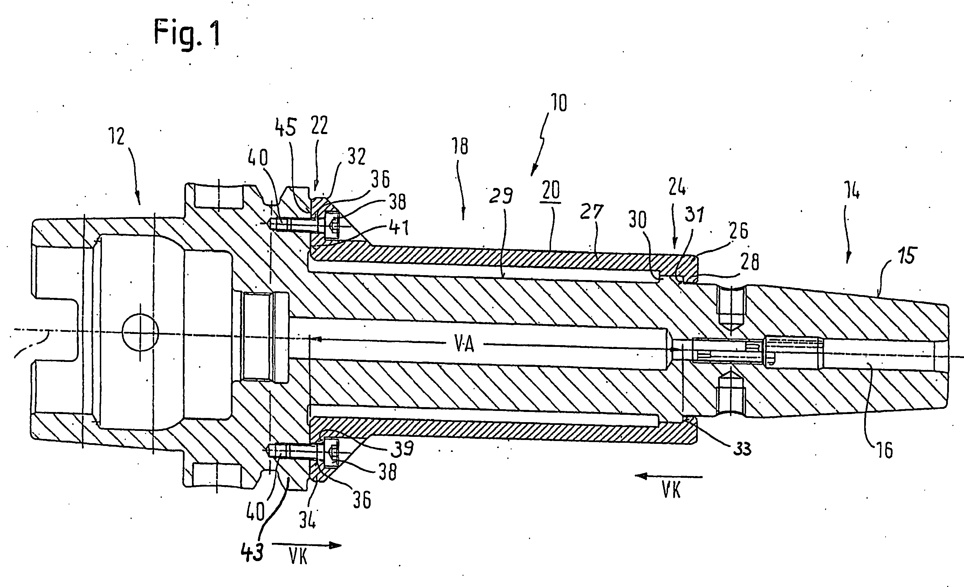

An Hand des in Fig. 1 dargestellten, allgemein mit 10 bezeichnden sollen zunächst grundlegende Gesichtspunkte erläutert werden, wie sie bei nach folgend beschriebenen Ausführungsformen erfindungsgemäßer Werkzeughalter vorgesehen sind. Der Werkzeughalter 10 weist an seinem in Fig. 1 linken Endbereich eine Kopplungsausbildung 12 zur Kopplung des Werkzeughalters 10 mit einer nicht dargestellten Werkzeugmaschine in an sich bekannter Weise auf. Durch die mit der Werkzeugmaschine gekoppelte Kopplungsausbildung 12 findet eine Drehmomentübertragung vom Drehantrieb der Werkzeugmaschine auf den Werkzeughalter 10 statt.

An seinem der Kopplungsausbildung 12 entgegengesetzten Längsende weist der Werkzeughalter 10 eine Spannausbildung 14 auf, welche eine im gezeigten Beispiel zylindrische Spannausnehmung 16 aufweist, in die ein Schaft eines Werkzeugs eingeführt und dort festgespannt werden kann. In dem in Fig. 1 gezeigten Beispiel handelt es sich um einen Werkzeughalter 10 zum Schrumpfspannen. Die Spannausbildung 14 wird dazu an ihrer Außenumfangsfläche 15 im Bereich der Spannausnehmung 16 erwärmt, so dass sich die Spannausbildung thermisch ausdehnt und der Durchmesser der Spannausnehmung 16 größer wird. In diesem erwärmten Zustand wird der Schaft eines Werkzeugs in den Spannraum 16 eingeführt, woraufhin man den Werkzeughalter 10 im Bereich der Spannausbildung abkühlt oder sich abkühlen lässt, so dass zwischen Werkzeugschaft und der Spannausbildung 14 durch die abkühlungsbedingte Schrumpfung der Spannausbildung 14 der Werkzeugschaft mit Presssitz in der Spannausnehmung 16 festgelegt ist. Derartige Werkzeughalter sind im Stand der Technik allgemein bekannt.

Der Werkzeughalter 10 ist um eine Drehachse D drehbar und ist darüber hinaus bezüglich dieser Drehachse D im Wesentlichen symmetrisch. Alle Richtungsangaben in dieser Anmeldung, welche sich auf eine Achse beziehen, sind auf die Drehachse D bezogen. Dies gilt für eine axiale Richtung, eine Umfangsrichtung und eine radiale Richtung.

In einem zwischen der Kopplungsausbildung 12 und der Spannausbildung 14 gelegenen axialen Schaftabschnitt 18 ist der Werkzeughalter 10 von einer Hülse 20 koaxial umgeben. Die Hülse 20 ist an zwei in axialer Richtung mit Abstand voneinander vorgesehenen Stützstellen 22 und 24 am Werkzeughalter 10 abgestützt. Die Stützstelle 22 in Fig. 1 ist dabei die der Kopplungsausbildung 12 nähere Stützstelle, während die Stützstelle 24 der Spannausbildung 14 näher liegt. Die Stützstellen 22 und 24 erstrecken sich um den Werkzeughalter 10 herum. An ihrem in Fig. 1 rechten Längsende 26 weist die Hülse 20 einen umlaufenden Radialvorsprung 28 auf, welcher von dem Hülsenkörper 27 nach radial innen vorsteht.

Dieser Radialvorsprung 28 ist längs des Umfangs des Werkzeughalters 10 in Anlageeingriff mit einem am Werkzeughalter 10 umlaufenden Schulter bzw. Bund 30, welcher ausgehend von der im Wesentlichen zylindrischen Schaftmantelfläche 29 des Schaftabschnitts 18 nach radial außen vorsteht. Genauer liegt eine im Wesentlichen orthogonal zur Drehachse D orientierte, im montierten Zustand der Hülse 20 zur Kopplungsausbildung 12 hinweisende Anlagefläche 31 des Radialvorsprungs 28 der Hülse 20 an einer ebenfalls zur Drehachse D im Wesentlichen orthogonalen, zur Spannausbildung 14 hinweisenden Stirnfläche 33 des umlaufenden Bundes 30 an. Über diesen Anlagekontakt der eine Fuge bildenden Flächen 31 und 33 ist an der Stützstelle 24 eine in axiale Richtung wirkende und zur Kopplungsausbildung 12 hin gerichtete Verspannungskraft VK auf den Werkzeughalter 10 übertragbar.

An seinem der Kopplungsausbildung 12 näheren Längsende 32 weist die Hülse 20 einen nach radial außen verlaufenden Radialflansch 34 auf. Der Radialflansch 34 ist in Umfangsrichtung mit einer Mehrzahl von in gleichen Winkelabständen voneinander angeordneten Durchgangsbohrungen 36 versehen. Durch diese Durchgangsbohrungen 36 sind Schrauben 38 hindurchgeführt, deren Schraubenkopf auf einer zur Drehachse D im Wesentlichen orthogonalen und zum anderen Längsende 26 hinweisenden Auflagefläche 39 des Radialflansches 34 aufliegt.

Die Schrauben 38 sind in den Durchgangslöchern 36 zugeordnete Sacklöcher 40 mit Innengewinde im Werkzeughalter 10 eingedreht.

Durch Festziehen der Schrauben 38 sowie durch ihre Abstützung am Radialflansch 34 der Hülse 20 ist an der Stützstelle 22 über das Innengewinde der Sacklöcher 40 eine in axiale Richtung wirkende und zur Spannausbildung 14 hin gerichtete Verspannungskraft VK übertragbar. Durch Wahl des Anzugsdrehmoments der Schrauben 38 kann der Betrag der Verspannungskraft VK eingestellt werden. Hierzu kann ein Spalt zwischen der zur Drehachse D im Wesentlichen orthogonalen und zur Spannausbildung 14 hinweisenden Anlagefläche 41 eines von der Kopplungsausbildung 12 radial abstehenden Ringbunds bzw. Ringflansches 43 und der zur Drehachse D ebenfalls orthogonalen und zur Kopplungsausbildung 12 hinweisenden Stirnfläche 45 des Radialflansches 34 der Hülse 20 belassen sein.

Zur einfachen Einstellung einer vorbestimmten Verspannungskraft können jedoch gemäß einer Ausführungsform der Erfindung zwei Anlageflächen am Werkzeughalter derart vorgesehen sein, dass der zwischen ihnen liegende axiale Abstand größer ist als ein axialer Abstand zwischen den Anlageflächen zugeordneten Gegenanlageflächen der Hülse bei Betrachtung des unmontierten Zustands der Hülse. Im Beispiel von Fig. 1 ist der axiale Abstand zwischen den Anlageflächen 33 und 41 um ca. 0,3 bis 0,5 Millimeter größer als der Abstand der Gegenanlageflächen 31 bzw. 43. Die Schrauben 38 werden dann einfach angezogen, bis die Flächen 41 und 43 aneinander anliegen. Aufgrund der so erreichten Materialdehnung der Hülse wird eine vorbestimmte Verspannungskraft auf den Verspannungsabschnitt VA ausgeübt.

Die oben beschriebene an der Stützstelle 24 auftretende Verspannungskraft VK ist eine Lagerreaktionskraft der durch Anziehen der Schrauben 38 hervorgerufenen Verspannungskraft VK, wodurch die an den jeweiligen Stützstellen auftretenden Verspannungskräfte VK betragsmäßig gleich groß und entgegengesetzt gerichtet sind. Dadurch ist der zwischen den Stützstellen 22 und 24 gelegene Verspannungsabschnitt VA unter eine erhöhte Axialdruckspannung gesetzt. Die im Verspannungsabschnitt VA wirkende erhöhte axiale Druckspannung ist höher als eine axiale Spannungsbelastung in den in axialer Richtung an den Verspannungsabschnitt angrenzenden Axialabschnitten des Werkzeughalters 10. Durch diesen Abschnitt VA erhöhter axialer Druckspannung ist die Federsteifigkeit des Werkzeughalters 10 gegenüber einem unverspannten Zustand verändert, so dass sich auch die am Werkzeughalter 10 besonders einfach anregbaren Schwingungsformen und die diesen zugeordneten Resonanzfrequenzen mit der geänderten Federsteifigkeit ändern. Dies gilt sowohl für die Resonanzfrequenz von am Werkzeughalter 10 anregbaren Torsionsschwingungen um die Drehachse D herum sowie von Transveralschwingungen in einer die Drehachse D enthaltenden Ebene. Durch die eine Verspannungsanordnung bildenden Bauteile Hülse 20 und Schrauben 38 kann somit die Federsteifigkeit des Werkzeughalters 10 derart beeinflusst werden, dass unerwünschte Schwingungen im Betrieb des Werkzeughalters 10, etwa bei bekannter Schneidenanzahl eines im Werkzeughalter 10 eingespannten Werkzeugs sowie bekannter Betriebsdrehzahl des Werkzeughalters 10, schwieriger anzuregen sind bzw. mit geringerer Wahrscheinlichkeit auftreten. Dadurch wird schließlich die mit dem Werkzeughalter 10 erreichbare Bearbeitungsgenauigkeit und auch die Standzeit des Werkzeugs erhöht.

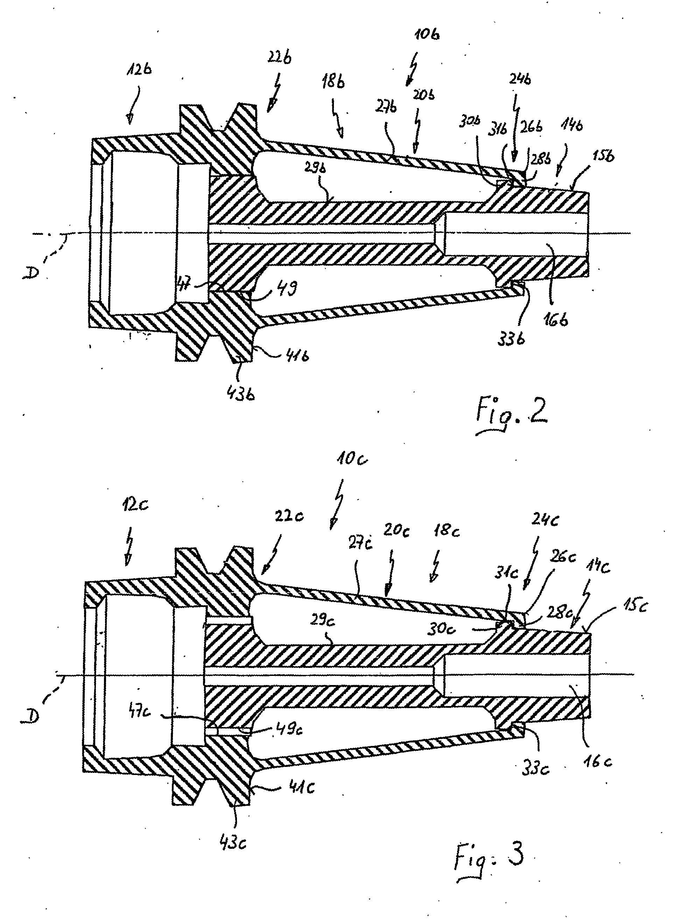

In Fig. 2 und allen folgenden Figuren sind gleiche Bauteile stets mit gleichen Bezugszeichen und zur Unterscheidung mit wenigstens einem Buchstaben versehen. Bauteile werden lediglich im Zusammenhang mit derjenigen Figur ausführlich erläutert, in welcher sie erstmalig dargestellt sind. In Bezug auf diese Bauteile wird ausdrücklich auf deren Beschreibung in der Figur verwiesen, in welcher sie erstmalig in Erscheinung treten. Die in den Figuren dargestellten Merkmale der Werkzeughalter sind hierbei untereinander beliebig kombinierbar.

Fig. 2 zeigt einen Werkzeughalter 10b, der sich von dem Werkzeughalter der Fig. 1 im Wesentlichen dadurch unterscheidet, dass der Hülsenkörper 27b im Wesentlichen konusförmig ausgebildet ist und sein im Durchmesser größeres Ende an der Stützstelle 22b integral und einstückig in die Stützfläche 41 b des Ringflansches 43b der Kopplungsausbildung 12b übergeht. Die zur Spannausbildung 14b hin sich verjüngende Hülse 20b verbessert die Biegesteifigkeit des Werkzeughalters 10b. Der Schaftabschnitt 29b ist mit der Spannausbildung 14b und dem Bund 30b einstückig ausgebildet und ist durch eine zylindrische Öffnung 47 im Bereich des Ringflansches 43 der Kopplungsausbildung 12b in die Hülse 20b axial eingesteckt. Der Innendurchmesser der Öffnung 47 ist dementsprechend etwas größer als der Außendurchmesser des Bunds 30b. An dem der Kopplungsausbildung 12b benachbarten Ende ist der Schaftabschnitt 29b mit einer Presssitzfläche 49 versehen, die im radialen Presssitz in der Öffnung 47 gehalten ist. Die Passung ist so gewählt, dass der Presssitz die axiale Vorspannkraft VK der auf Zug belasteten Hülse 20b aufnehmen kann.

Fig. 3 zeigt einen Werkzeughalter 10c, der sich von dem Werkzeughalter 10b der Fig. 2 im Wesentlichen nur dadurch unterscheidet, dass anstelle der reibschlüssig im Presssitz in der Öffnung 47 gehaltenen Presssitz 49 die Öffnung als Gewindeöffnung 47c ausgebildet ist, in die formschlüssig ein Außengewinde 49c axial eingeschraubt ist, welches an dem zur Kopplungsausbildung 12c benachbarten Ende des Schaftabschnitts 29c angeformt ist. Die axial, auf die Hülse 20c wirkende Zugkraft wird durch Verdrehen des Schaftabschnitts 29c eingestellt.

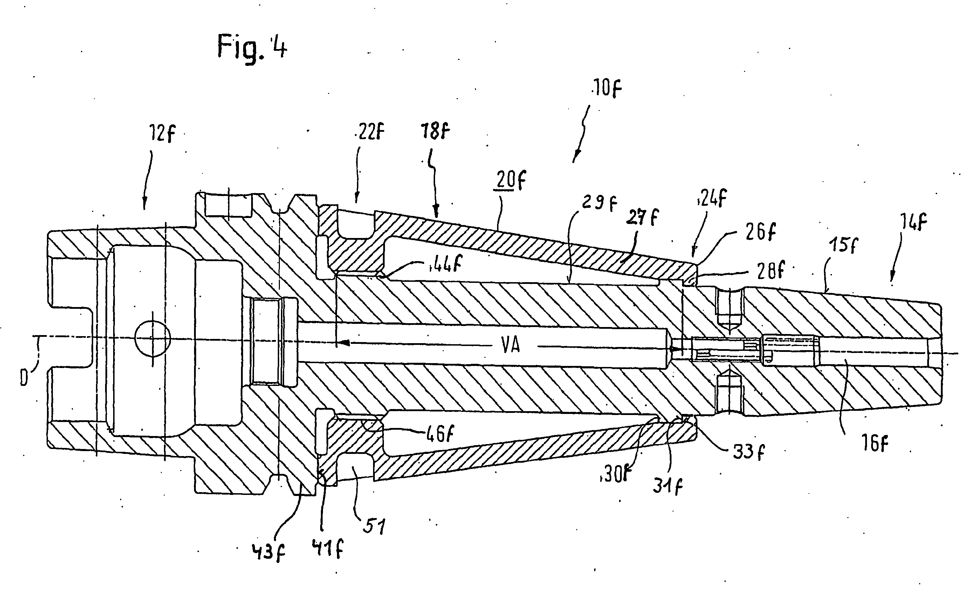

Bei der in Fig. 4 gezeigte Ausführungsform des Werkzeughalters 10f ist die kopplungsausbildungsnähere Stützstelle 22f ist durch einen Gewindeeingriff eines Außengewindes 44f am Werkzeughalter 10f mit einem Innengewinde 46f einer Hülse 20f gebildet.

Die spannungsausbildungsnähere Stützstelle 24f ist dagegen entsprechend der Ausführungsform der Fig. 1 gebildet Zur näheren Erläuterung der Ausgestaltung der Stützstellen 22f und 24f wird ausdrücklich auf die Beschreibung der Fig. 1 verwiesen.

Im Bereich der Stützstelle 22f, bei welcher die eine axiale Verspannung des Verspannungsabschnitts VA des Werkzeughalters 10f bewirkende Verspannungskraft zusammen mit der Stützstelle 24f erzeugt wird, sind Ausnehmungen 51 für einen Werkzeugeingriff ausgebildet. Dadurch kann die auf den Werkzeughalter 10f ausgeübte Verspannungskraft sehr genau eingestellt werden.

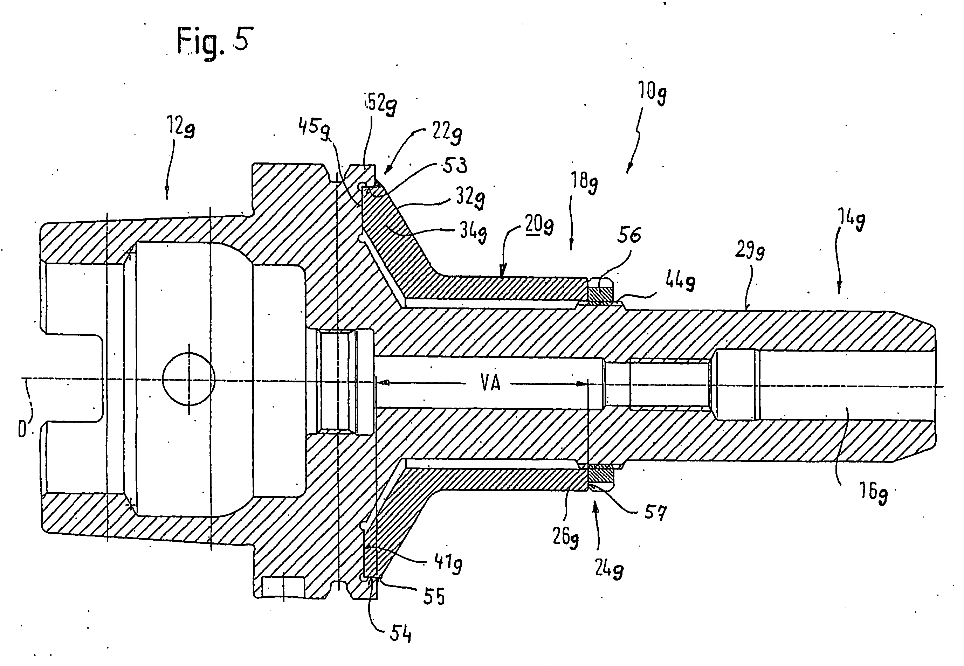

In Fig. 5 ist die Hülse 20g an ihrem der Kopplungsausbildung 12g näheren Längsende 32g in Anlageeingriff an dem Werkzeughalter 10g. Eine zur Drehachse D orthogonale Fläche 45g des Radialflansches 34g ist in Anlage an einer zur Drehachse D orthogonalen Fläche 41g an der Kopplungsausbildung 12g des Werkzeughalters 10g. Darüber hinaus ist nahe der Anlagefläche 49g der Kopplungsausbildung 12g ein den Radialflansch 34g radial außen umgebender Zentrierbund 52 am Werkzeughalter 10g ausgebildet. Dieser Zentrierbund 52 sorgt für eine korrekte koaxiale Lage der Hülse 20g bezüglich des Werkzeughalters 10g. Eine nach radial innen weisende Zentrierfläche 53 des Zentrierbundes 52 ist in Anlageeingriff mit einer nach radial außen weisenden Fläche 54 des Radialflansches 34g. Um eine Verlagerung der Hülse an der so gebildeten Stützstelle 22g zu vermeiden, sind der Radialflansch 34g und der Zentrierbund 52 durch eine Schweißnaht 55, welche um den Werkzeughalter umläuft, miteinander unlösbar verbunden.

An der Stützstelle 24g ist an der Mantefläche 29g des Schaftbereichs 18g des Werkzeughalters 10g ein Außengewinde 44g vorgesehen, auf welches eine Stellmutter 56g aufgeschraubt ist. Die Stellmutter 56g drückt in Richtung der Drehachse D auf die zur Drehachse D im Wesentlichen orthogonale Stirnfläche 57 der Hülse 20g. Durch Wahl des Anzugdrehmoments der Stellschraube 56 kann die auf die Hülse 20g ausgeübte Druckkraft eingestellt werden. Der Verspannungsabschnitt VA des Werkzeughalters 10g ist somit gezielt unter Axialzugspannung setzbar. Die auf die Hülse 20g wirkenden Druckkräfte wirken im Versparinungsabschnitt VA als Reaktionszugkräfte auf den Werkzeughalter 10g.

Bei dem Werkzeughalter 10g in Fig. 5 sind die Kopplungsausbildung 12g, die Spannausbildung 14g und der Schaftabschnitt 18g integral einteilig ausgebildet

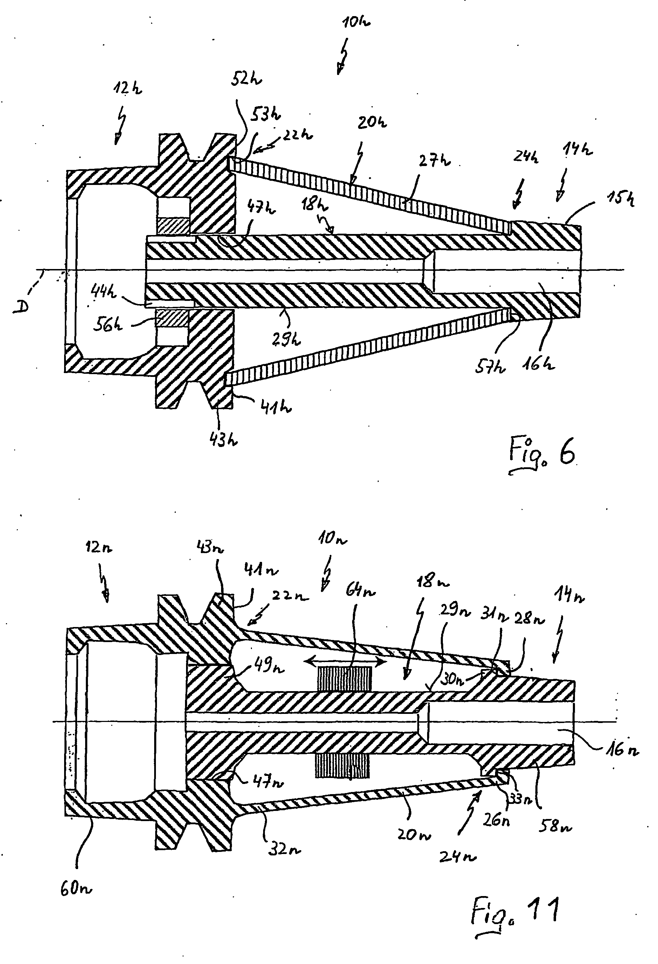

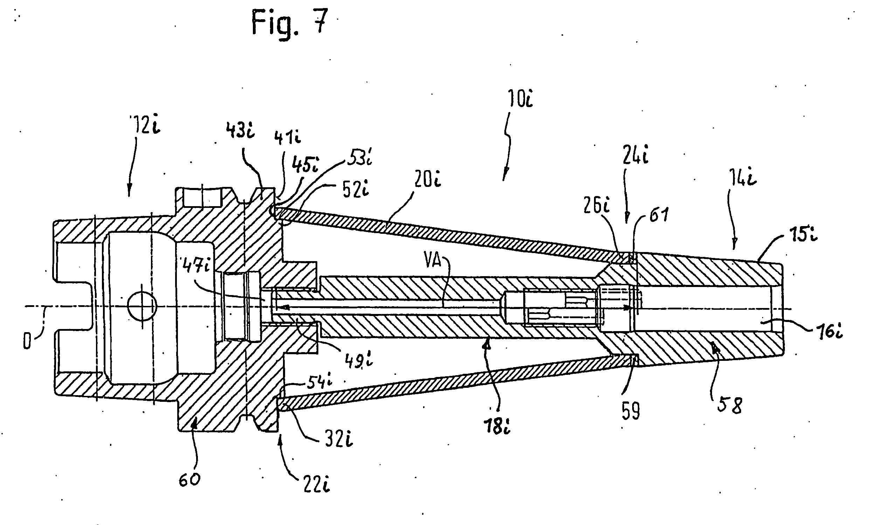

Fig. 6 zeigt einen Werkzeughalter 10h, der sich von dem Werkzeughalter 10g in Fig. 7 im Wesentlichen dadurch unterscheidet, dass der einteilig mit dem Spannabschnitt 14h ausgebildete Schaftabschnitt 18h eine zentrische Öffnung 47h der Koppelausbildung 12h axial durchdringt und auf der zur Spannausbildung 14h axial abgewandten Seite eine Gewindemutter 56h trägt, die auf ein Außengewinde 44h des Schaftabschnitts 18h geschraubt ist. Mit Hilfe der Gewindemutter 56h können auf die hier konische Hülse 20h axiale Verspannungskräfte ausgeübt werden. Die Hülse 20h ist zwischen radial verlaufenden, ringförmigen Stirnflächen der jeweils als Fuge ausgebildeten Stützstellen 22h und 24h eingespannt.

In Fig. 7 ist ein zweiteilig ausgeführter Werkzeughalter 10i dargestellt Der Werkzeughalter 10i umfasst ein kopplungsseitiges Werkzeughalterteil 58, an welchem die Kopplungsausbildung 12i vorgesehen ist, und ein spannseitiges Werkzeughalterteil 60, an welchem die Spannausbildung 14i vorgesehen ist. Die beiden Werkzeughalterteile 58 und 60 sind miteinander verschraubt, wobei ähnlich der Variante in Fig. 3 ein Gewindezapfen 49i mit Außengewinde am spannausbildungsseitigen Werkzeughalterteil 58 in eine Gewindeöffnung 57i am kopplungsausbildungsseitigen Werkzeughalterteil 60 eingedreht ist.

Die Werkzeughalterteile 58 und 60 sind dabei gegen eine sich zur Spannungsausbildung hin verjüngende konische Hülse 20i festgedreht. Mit einer zur Drehachse D orthogonalen stirnseitigen Endfläche 61 liegt die Hülse 20i unter Bildung einer Fuge an einer zur Drehachse D ebenfalls orthogonalen Anlagefläche der Spannausbildung 14i an. Eine entsprechende Fuge ist auf der zur Kopplungsausbildung 12i gelegenen, Seite der Hülse 20i im Verspahnungskraftweg zwischen den Flächen 41i und 45i vorgesehen. Radial außen umschließt das kopplungsausbildungsnähere Längsende 32i der Hülse 20i einen Bund 52i an der Kopplungsausbildung 12i und wird dadurch bezüglich der Drehachse D zentriert. An seinem spannungsausbildungsnäheren Längsende 26i ist die Hülse durch das Werkzeughalterteil 58 an seinem Innenumfang bezüglich der Drehachse D zentriert, wobei die Stirnseite des spannungsausbildungsnäheren Längsendes 26i der Hülse 20i an einem Dämpfungsring 59 anliegt, welcher in axialer Richtung zwischen dem stirnseitigen Längsende 26i der Hülse 20i und dem Werkzeughalterteil 58 mit der Spannungsausbildung 14i angeordnet ist. Der Dämpfungsring 59 kann beispielsweise aus Keramik gefertigt sein und weist eine andere Materialelastizität als der Werkzeughalter 10i oder/und als die Hülse 20i auf. Der Dämpfungsring 59 dämpft unerwünschte Bewegungen des Werkzeughalters 10i durch innere Reibung.

Bei der in Fig. 7 dargestellten Ausführungsform ist die Hülse 20i aufgrund der Verschraubungsverbindung der Werkzeughalterteile 58 und 60 in axialer Richtung unter Druckspannung gesetzt, so dass sich der Verspannungsabschnitt VA des Werkzeughalters 10i unter mechanischer Zugspannung befindet. Diese Zugspannung kann in ihrem Betrag durch Auf bringen eines bestimmten Drehmoments bei der Verschraubung der beiden Werkzeughalterteile 58 und 60 geeignet gewählt werden. Eine zusätzliche Möglichkeit zur Feineinstellung der gewünschten Axialverspannung liegt in der Verwendung eines Gewindes mit sehr geringer Steigung am Zapfen 49i und an der Öffnung 47i.

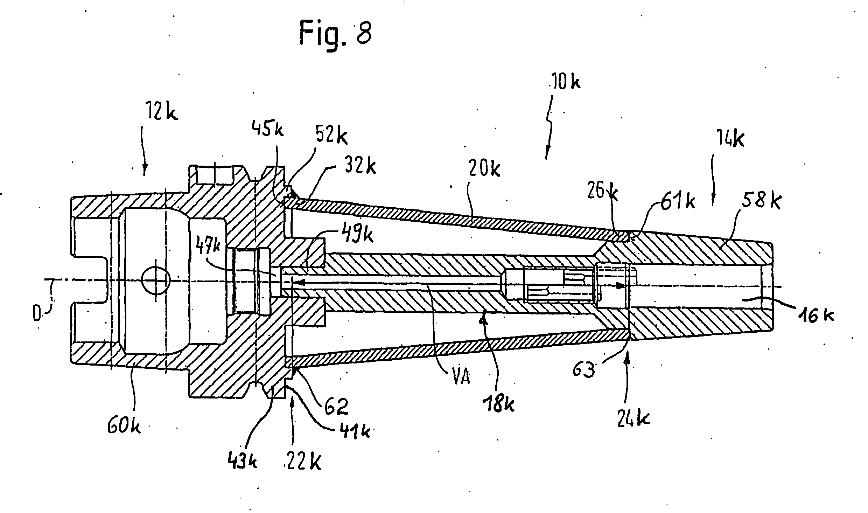

In Fig. 8 ist wiederum ein zweiteiliger Werkzeughalter 10k mit den Werkzeughalterteilen 58k und 60k dargestellt. Anders als in Fig. 7 sind die Werkzeughalterteile 58k und 60k nicht miteinander verschraubt. Vielmehr ist der Zapfen 49k des Werkzeughalterteils 48k lediglich in die Öffnung 47k des Werkzeughalterteils 60k eingesteckt.

Bei der Herstellung des Werkzeughalters 10k wird dieser nach dem Zusammenstecken der beiden Werkzeughalterteile 58k und 60k in axialer Richtung mit einer Druckkraft beaufschlagt, so dass seine Länge unter der Wirkung der Druckkraft entsprechend der jeweiligen Materialelastizitäten verkürzt wird. Der Werkzeughalter 10k kann dabei verkürzt werden, bis die beiden stirnseitigen Endflächen 45k, 61k der Hülse 20k an den jeweiligen zugeordneten Gegenflächen an den Werkzeughalterteilen 60k bzw. 58k anliegen. Dann wird die Hülse 20k an ihren beiden Längsenden 26k und 32k durch Schweißen unlösbar mit den jeweiligen Werkzeughalterteilen 58k und 60k verbunden. Dies geschieht durch Aufbringen einer umlaufenden Schweißnaht 62 am kopplungsausbildungsnäheren Längsende 32k und einer umlaufenden Schweißnaht 63 am spannausbildungsnäheren Längsende 26k der Hülse 20k. Nach Aufbringen der Schweißnaht wird die, etwa durch eine Presse oder eine Spannvorrichtung auf den Werkzeughalter ausgeübte axiale Montagedrucklast aufgehoben, so dass sich der zuvor verkürzte Werkzeughalter 10k gegen die Materialelastizität der Hülse 20k entspannt. Dabei wird die Hülse 20k unter Zugspannung gesetzt, so dass der zwischen den Schweißnähten 62 und 63 gelegene axiale Verspannungsabschnitt unter Druckspannung steht.

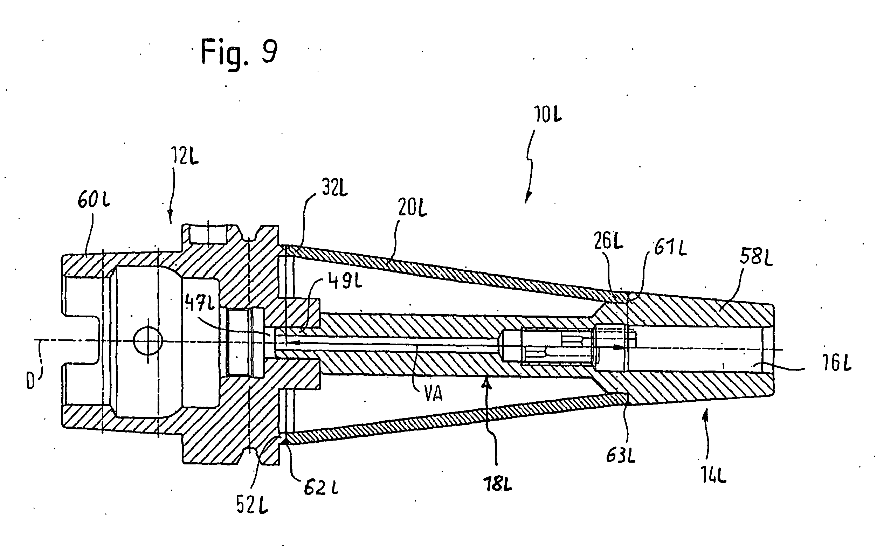

Die Ausführungsform von Fig. 9 entspricht im Wesentlichen der von Fig. 7. Lediglich das kopplungsausbildungsnähere Längsende 32l der Hülse 20l ist nicht mehr vom Bund 52l an seinem Außen- oder Innenumfang zentriert. Vielmehr stoßen das Längsende 32l der Hülse 20l und eine Stirnfläche des Bundes 52l stirnseitig aneinander an. Eine Zentrierung kann hier während der Montage erfolgen, beispielsweise durch eine die Verbindungsstelle zwischen Bund 52l und Längsende 32l umgreifende Außenhülse. Zur besseren Zentrierung des kopplungsausbildungsnäheren Längsendes 32l der Hülse 20l kann dieses Längsende auch abgestuft ausgebildet sein, so dass der Bund 52l einen Axialvorsprung am Längsende 32l der Hülse 20l radial außen umgreift und so die Hülse an ihrem Längsende 32l zentriert.

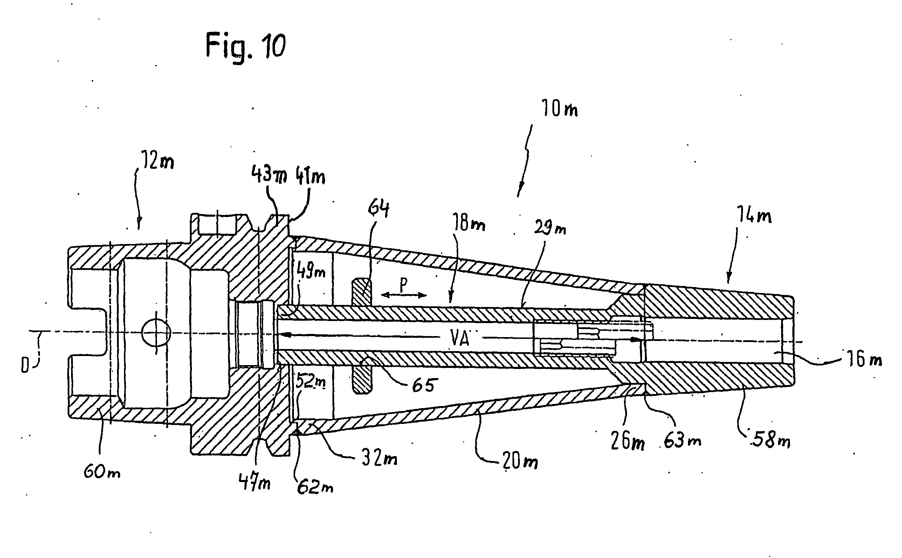

Die in Fig. 10 dargestellte Ausführungsform entspricht in ihrem Verspannungszustand der letztgenannten Ausführungsform von Fig. 9. Zusätzlich ist auf dem Außenmantel 29m ein Schwingmassenstück 64 in axialer Richtung verlagerbar vorgesehen, wie durch den Doppelpfeil P angezeigt ist.

Das Schwingmassenstück 64 wirkt zusätzlich zu der axialen Verspannung einer unerwünschten Schwingungsanregung des Werkzeughalters 10m entgegen. Dies gilt sowohl für Torsions- als auch für Transversalschwingungen. Sollte der Werkzeughalter 10m zu Schwingungen angeregt werden, wird hierdurch auch der schlanke Schaftabschnitt 18m in Bewegung versetzt. Durch geeignete Wahl des axialen Anbringungsortes des Schwingmassenstücks 64 kann erreicht werden, dass das Schwingmassestück und der es tragende Schaftabschnitt 18m phasenversetzt zu einer Schwingung gleicher Frequenz angeregt werden, so dass es am Gesamtsystem Werkzeughalter 10m durch destruktive Interferenz zu einer Gesamtschwingung mit geringerer oder sogar verschwindender Amplitude kommt.

Das Schwingmassenstück 64 kann verschiebbar, verdrehbar, verschraubbar und dergleichen am Schaftabschnitt 18m angeordnet sein. Das Schwingmassenstück 64 ist durch einen einfachen Ring gebildet, durch dessen Innenöffnung 65 der Schaftabschnitt 18m geführt ist. Zur Festlegung der axialen Position des Schwingmassenstücks 64 am Schaftabschnitt 18m wird dieser zusätzlich in radialer Richtung gesichert, etwa durch Verstiftung.

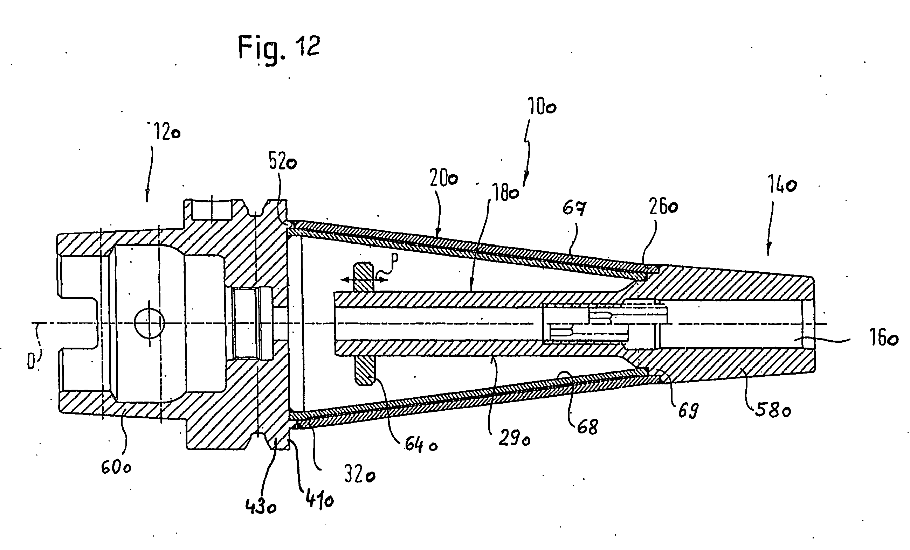

Fig. 11 zeigt einen Werkzeughalter 10n, der im Wesentlichen dem Werkzeughalter 10b aus Fig. 2 entspricht, auf seinem Schaftabschnitt 18n jedoch wiederum ein axial verschiebbares Schwingmassenstück 64n ähnlich dem Werkzeughalter 10m aus Fig. 10 trägt. Auch das Schwingmassenstück 64n wirkt als Tilgermasse zur Minderung der Schwingungsamplitude im Arbeitsbereich des Werkzeughalters 10n.

Die Ausführungsform von Fig. 12 unterscheidet sich von der von Fig. 10 zum einen dadurch, dass das Werkzeughalterteil 58o mit der Spannausbildung 14o nur über die Hülse 20o mit dem Werkzeughalterteil 60o mit der Kopplungsausbildung 12o verbunden ist. Der Schaftabschnitt 18o, welcher einstückig am Werkzeughalterteil 58o ausgebildet ist, reicht mit seinem freien Längsende nicht bis zum Werkzeughalterteil 60o, sondern endet frei auskragend in dem von der Hülse 20o umgebenen Raum.

Zum anderen unterscheidet sich die Ausführungsform von Fig. 12 von der von Fig. 10 dadurch, dass die Hülse 20o durch zwei über einen großen gemeinsamen Axialabschnitt hinweg koaxial angeordnete Hülsenmäntel 67 und 68 gebildet ist.

Das frei auskragende Längsende des Schaftabschnitts 18o gestattet die Anregung anderer Schwingungsformen als die des beidseitig eingespannten Schafts 18o in der Ausführungsform von Fig. 10.

Die axiale Verspannung wird bei der Ausführungsform von Fig. 12 durch eine Verspannung der beiden Hülsenmäntel 67 und 68 relativ zueinander erreicht. Jeder Hülsenmantel 67 und 68 ist gesondert an jedem seiner Längsenden mit den diesen Längsenden zugeordneten Werkzeughalterteilen 58o und 60o verschweißt. Eine Zentrierung wird beispielsweise dadurch erreicht, dass der umlaufende Bund 52o am Werkzeughalterteil 60o den radial inneren Hülsenmantel 68 an dessen Außenumfang umgibt, so dass eine Zentrierung des Hülsenmantels 68 bezüglich des Werkzeughalterteils 60o erreicht ist. Der radial innere Hülsenmantel 68 umgibt wiederum radial außen einen Stufenabschnitt 69 des Werkzeughalterteils 58o, so dass dieser durch den inneren Hülsenmantel 68 zentriert ist. Die Verbindungssituation des Hülsenmantels 68 mit den einzelnen Werkzeughalterteilen 58o und 60o entspricht im Wesentlich der Verbindungssituation der Hülse 20k in der Ausführungsform von Fig. 8 auf deren Beschreibung an dieser Stelle ausdrücklich verwiesen sei.

Nach Anbringung des inneren Hülsenmantels 68 wird der Werkzeughalter 10o, wie im Zusammenhang mit der Ausführungsform von Fig. 8 beschrieben wurde, in axialer Richtung mit einer Druckkraft beaufschlagt, so dass die axiale Länge des Werkzeughalters 10o verkürzt wird. In diesem unter äußerer Krafteinwirkung verkürzten Zustand werden die Längsenden des äußeren Hülsenmantels 67 mit den jeweiligen Werkzeughalterteilen 58o und 60o durch Anschweißen unlösbar verbunden. Anschließend wird die von außen aufgebrachte axiale Druckkraft gelöst so dass der innere Hülsenmantel unter axialer Druckspannung steht, während der äußere Hülsenmantel unter axialer Zugspannung steht.

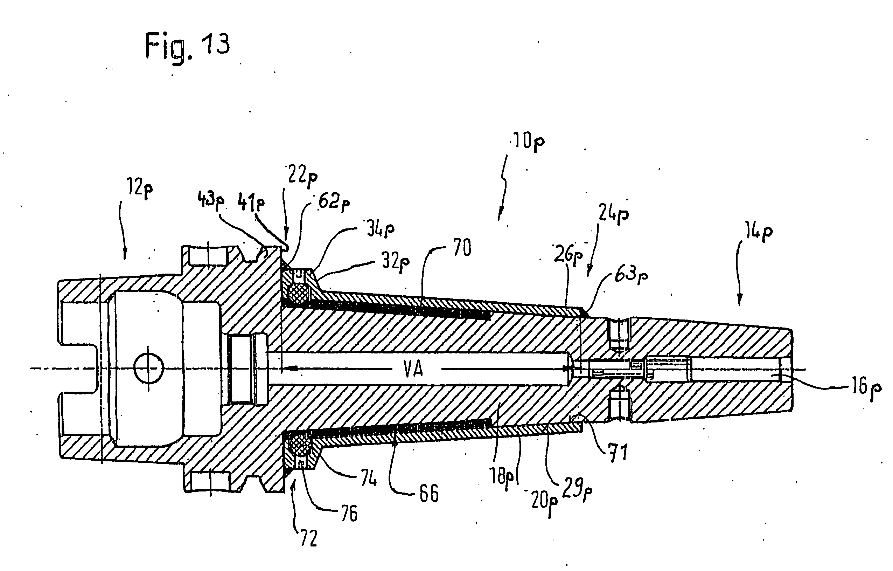

In Fig. 13 ist, wie schon in Fig. 1 und 4, ein einstückiger Werkzeughalter 10p dargestellt. Eine konische Hülse 20p, welche den Werkzeughalter 10p radial außen umgibt, ist am radial äußeren Ende ihres Radialflansches 34p an dem Längsende 32p mit dem Werkzeughalter 10p verschweißt. Ebenso kann die Hülse 20p an ihrem der Spannausbildung 14p zugewandten Längsende 26p mit dem Werkzeughalter 10p verschweißt sein, wie in der oberen Hälfte des in Fig. 13 dargestellten Werkzeughalters 10p gezeigt ist.

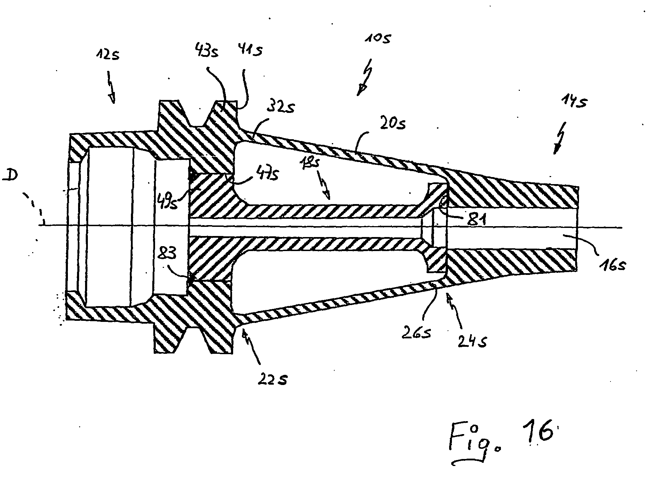

Der von der Hülse 20p umgebene Axialabschnitt des Werkzeughalters 10p ist über einen vorbestimmten Axialabschnitt mit einer Umfangsausnehmung versehen, so dass der Werkzeughalter 10p gemeinsam mit der Hülse 20p ein Raumvolumen 66 definiert, in welches im vorliegenden Beispiel der Fig. 16 Öl 70 derart eingefüllt ist, dass das gesamte Raumvolumen 66 mit dem Öl 70 gefüllt ist.

Bei Drehung des Werkzeughalters 10p übt das Öl 70 aufgrund von Zentrifugalkraft eine Kraft nach radial außen auf die Innenwandung der Hülse 20p aus. Durch die Konizität der Hülse 20p sowie durch ihre feste Einspannung an den Längsenden 26p und 32p ruft diese nach radial außen wirkende Kraft eine in axialer Richtung wirkende Kraft auf die Hülse hervor, so dass ein Verspannungsabschnitt des Werkzeughalters 10p unter mechanischer Druckspannung steht.

Statt einer Schweißverbindung kann die konische Hülse im Bereich ihres spannausbildungsnäheren Längsendes 26p lediglich flächig mit ihrer konischen Innenfläche 71 an einer entsprechenden konischen Außenfläche 29p des Schaftabschnitts 18p anliegen, wie dies in der unteren Hälfte des Werkzeughalters 10p in Fig. 13 dargestellt ist. Die bei Drehung des Werkzeughalters in radialer Richtung auf die Hülse 20p wirkende Kraft ruft eine in Richtung der Hülsenwand verlaufende und zur Kopplungsausbildung 12p hin weisende Kraftkomponente hervor, durch welche der Bereich des Längsendes 26p geringfügig zur Kopplungsausbildung 12p hin verlagert wird. Dies bewirkt ein dichtendes Anliegen der konischen Innenfläche 71 der Hülse 20p und der konischen Außenfläche 29p des Schaftabschnitts 18p aneinander.

Zusätzlich ist am Radialflansch 34p eine Druckbeaufschlagungseinrichtung 72 vorgesehen, umfassend einen mit seiner radial inneren Seite in Benetzungskontakt mit dem Öl 70 stehenden umlaufenden Gummiring 74 sowie um den Umfang des Radialflansches 34p in gleichen Abständen verteilt angeordnete Stellschrauben 76. Mit den Stellschrauben 76 kann der Gummiring 74 nach radial innen in das Raumvolumen 66 hinein verstellt werden. Dadurch wird der Druck im Öl 70 erhöht, was zu einer zusätzlichen axialen Verspannung des Werkzeughalters 10p über die Krafteinwirkung des Öls 70 auf die Hülse 20p führt. Anstelle eines umlaufenden Gummirings können auch den Stellschrauben jeweils zugeordnete Kolben aus Keramik, Metall, usw. vorgesehen sein, die das Öl 70 direkt verdrängen.

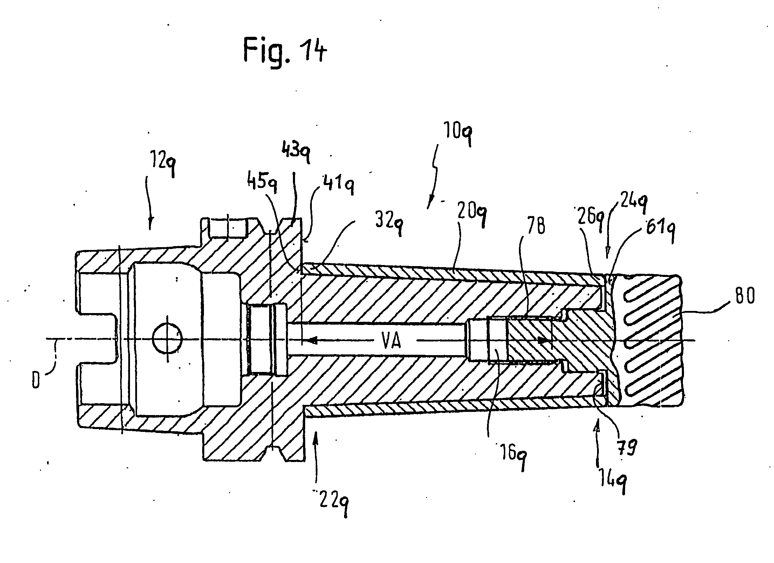

Bei der in Fig. 14 gezeigten Ausführungsform reicht die den Werkzeughalter 10q radial außen umgebende Hülse 20q über die Spannausbildung 14q in axialer Richtung hinaus.

An seinem der Kopplungsausbildung 12q näheren Längsende 32q liegt die Hülse 20q mit ihrer zur Drehachse D im Wesentlichen orthogonalen Stirnfläche 45q an einer zur Drehachse im Wesentlichen ebenfalls orthogonalen Anlagefläche 41q an.

Die Spannausbildung 14q verfügt über ein Innengewinde, welches an der den Spannraum 16q begrenzenden Innenwandung ausgebildet ist. In dieses Innengewinde der Spannausbildung ist ein Spanngewinde 78 eines Fräskopfes 80 eingeschraubt. Das der Spannausbildung 14q zugeordnete Längsende 26q der Hülse 20q kommt mit seiner zur Drehachse D im Wesentlichen orthogonalen Stirnfläche 61q an eine zur Drehachse D im Wesentlichen ebenfalls orthogonale Rückfläche 79 des Fräskopfes 80 zur Anlage. Durch Eindrehen des Fräskopfes 80 in den Spannraum 16q gegen die Außenhülse 20q wird die Außenhülse 20q unter Druckspannung gesetzt, während der von der Außenhülse umgebene Verspannungsabschnitt VA des Werkzeughalters 10q unter Zugspannung gesetzt wird. Anstelle eines Fräskopfes 80 kann ein beliebiges anderes Werkzeug mit Spanngewinde in den Spannraum 16q eingedreht sein.

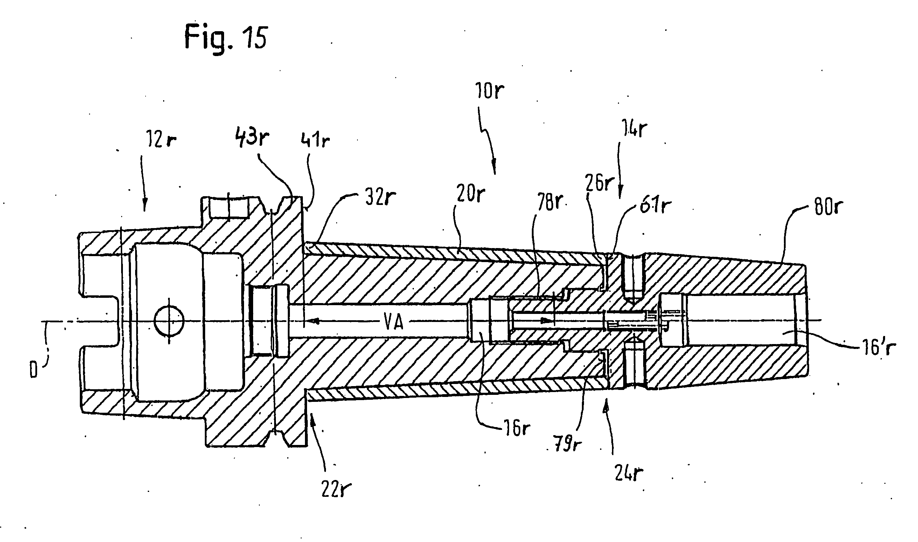

In Fig. 15 ist eine Ausführungsform gezeigt, welche im Wesentlichen der von Fig. 14 entspricht. Anstelle des Fräskopfes 80 ist dabei ein Schrumpfaufsatz 80r in den Spannraum 16r gegen die Hülse 20r eingeschraubt. Der Schrumpfaufsatz 80r verfügt wiederum über einen Spannraum 16'r, in welchen Werkzeugschäfte eingespannt werden können, wie im Zusammenhang mit der Spannausbildung 14 der Ausführungsform von Fig. 1 beschrieben wurde.

Bei den Werkzeughaltern der Fig. 1, 4 und 5 ist der Schaftabschnitt einteilig integral mit der Spannausbildung und der Kopplungsausbildung verbunden. Fig. 16 zeigt einen Werkzeughalter 10s, bei welchem die Hülse 20s integral einteilig mit der Kopplungsausbildung 12s und der Spannausbildung 14s ausgebildet ist. Die Hülse 20s hat Konusform und geht an ihrem Durchmesser größeren Ende 32s in die Stirnfläche 41s des radial abstehenden Flansches 43s der Kopplungsausbildung 12s über. Die Spannausbildung. 14s hat an ihrem dem Ende 26s der Hülse 20s zugewandten Ende eine orthogonale Stützfläche 81, die die Stützstelle 24s bildet und an der das der Spannausbildung 14s benachbarte Stirnende des Schaftabschnitts 18s anliegt. Das der Kopplungsausbildung 12s benachbarte Ende 49s des Schaftabschnitts 18s ist in der Öffnung 47s radial geführt und fixiert. Die Fixierung kann durch einen Presssitz ähntich dem Werkzeughalter der Fig. 2, durch eine Schraubverbindung ähnlich dem Werkzeughalter der Fig. 3 oder durch eine ringförmige Schweißnaht 83 erfolgen. Der Schaftabschnitt 18s wird auf Druck belastet fixiert, so dass die Hülse 20s auf Zug vorgespannt ist

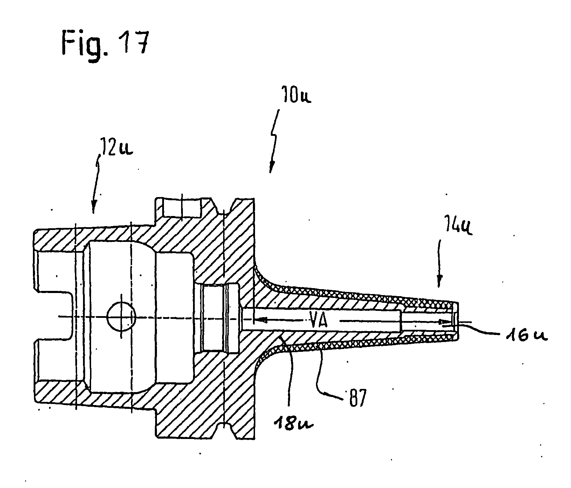

In Fig. 17 ist ein Werkzeughalter 10u dargestellt, auf welchen von der Kopplungsausbildung 12u bis zu seinem spannausbildungsnahen Längsendbereich ein vom Material des Werkzeughalters 10u verschiedenes Material 87 auf diesen hülsenförmig aufgebracht, vorzugsweise aufgeschrumpft ist. Auch hierdurch wird eine Axialverspannung eines Axialabschnitts 18u des Werkzeughalters 10u erreicht. Das Material kann Metall, Keramik, oder ein elektrostriktives Material sein, welches durch Anlegen einer elektrischen Spannung seine Längsabmessung in wenigstens einer Raumrichtung ändert. Somit kann durch Anlegen einer elektrischen Spannung an das aufgebrachte Material die von diesem auf den Werkzeughalter 10u ausgeübte Kraft verändert werden.

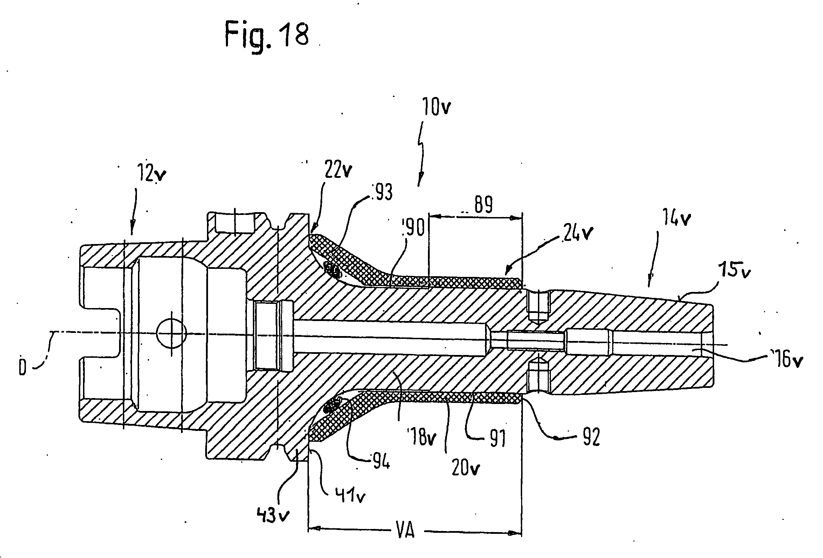

Fig. 18 zeigt einen Werkzeughalter 10v vom Schrumpfhaltertyp mit einem Spannschaft 18v, der an seinem einen Ende von einer durch die Kopplungsausbildung 12v gebildeten, achsnormale Schulter 88v axial absteht und an seinem der Kopplungsausbildung 12v axial abgewandten Seite seiner Spannausbildung 14v eine zentrische Spannausnehmung 16v zum Schrumpfspannen des Schafts des nicht näher dargestellten Werkzeugs enthält, wie dies anhand von Fig. 1 näher erläutert wurde. Zwischen der Kopplungsausbildung 12v und der Spannausbildung 14v ist der Spannschaft 18v von einer die Verspannungsanordnung bildenden Hülse 20v umschlossen, die sich mit ihrem der Kopplungsausbildung 12v benachbarten Ende in einer Stützstelle 22v an einer ringförmigen Stirnfläche 88 axial abstützt. Mit ihrem anderen, der Spannausbildung 14v axial benachbarten Stützende 24v sitzt die Hülse 20v in einem Reibschlussbereich 89 im Presssitz auf dem Umfang des Schaftabschnitts 18v. Axial zwischen dem Reibschlussbereich 89 und der Stützstelle 22v verläuft die Hülse 20v unter Bildung eines Ringspalts 90 in radialem Abstand vom Schaftabschnitt 18v. Die im Reibschlussabschnitt 89 im Presssitz aufeinander liegenden Umfangsflächen am Innenmantel der Hülse 20v einerseits und des Schaftabschnitts 18v andererseits haben die Form eines steilen Konus 91, der sich über die vorgegebene axiale Länge mit einer Steigung von etwa 0,1 zur Spannausbildung 14v hin axial verjüngt und zwar so, dass der Konus des Schaftabschnitts 18v bezogen auf die Endstellung der aufgesetzten Hülse 20v zur Erzeugung des Presssitzes ein Übermaß hat. Es versteht sich aber, dass die im Reibschlussabschnitt 89 aneinander liegenden Flächen auch als Zylinderflächen ausgebildet sein können. Zur Erzeugung der Vorspannkraft wird die der Spannausbildung 14v zugewandte Stirn 92 der Hülse mit einer Kraft von mehreren Tonnen, beispielsweise 10 Tonnen gegen die Ringfläche 41v gedrückt, was zu einer federnden Verspannung der Hülse 20v führt. Der Presssitz im Bereich 89 erzeugt insgesamt eine Haltekraft, die die solchermaßen vorgespannte Hülse 20v in ihrer vorgespannten Lage hält. Zugleich wird aber in den der Kopplungsausbildung 12v axial zugewandten Bereichen des Reibschlussabschnitts 89 eine Relativbewegung zwischen der Hülse 20v und dem Spannschaft 18v gegen die Reibschlusskraft erlaubt, wodurch die Dreh- und Biegeschwingungen des Schaftabschnitts 18v gedämpft werden.

Zur Verbesserung der Steifigkeit des Schaftabschnitts 18v ist der zur Kopplungsausbildung 12 benachbarte Endbereich der Hülse 20v als axial zur Spannausbildung. 14v hin sich verjüngende Konusabschnitt 93 ausgebildet, der einen den Spannschaft 18v umschließenden Dämpfungsring 94 aus steifelastischem Material überdeckt.

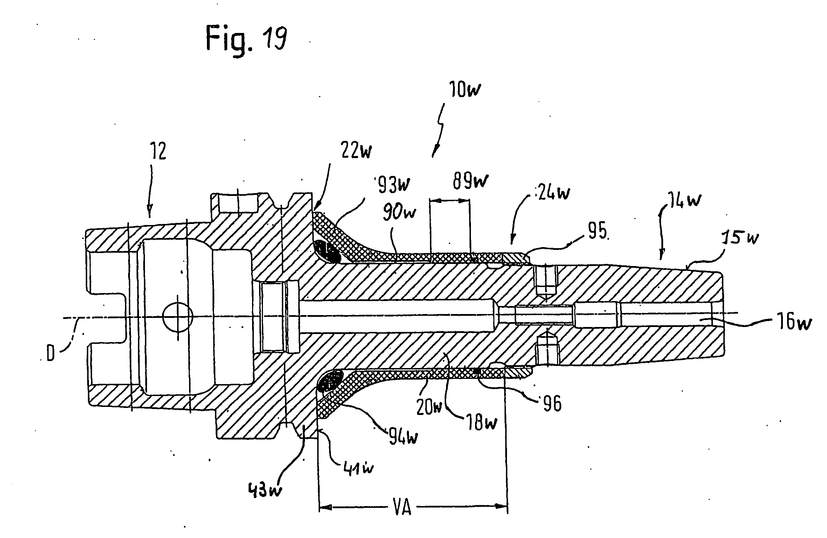

Fig. 19 zeigt eine Variante eines Werkzeughalters 10w vom Schrumpftyp, die sich von der Variante der Fig. 18 lediglich dadurch unterscheidet, dass der Reibschlussabschnitt 89w, in welchem der Schaftabschnitt 18w radiales Übermaß bezogen auf den Innendurchmesser der Hülse 20w hat in erster Linie für die Reibungsdämpfung des Werkzeughalters 10w bemessen ist, während die Stützstelle 24w, an der sich die Hülse 20w mit der Vorspannkraft FK abstützt durch eine Mutter 95 gebildet ist, die auf ein Außengewinde des Spannschafts 18w aufgeschraubt ist. Auch hier beträgt die Vorspannkraft, mit der die Hülse 20w zwischen ihren Stützstellen 22w und 24w eingespannt ist mehrere Tonnen, beispielsweise 10 Tonnen. Die Form der Hülse 20w entspricht im übrigen der Form der Hülse 20v in Fig. 18, wobei jedoch zusätzlich im Bereiche des der Spannausbildung 14w zugewandten Endes ein weiterer Dämpfungsring 96 zwischen der Hülse 20w und dem Spannschaft 18w vorgesehen ist.

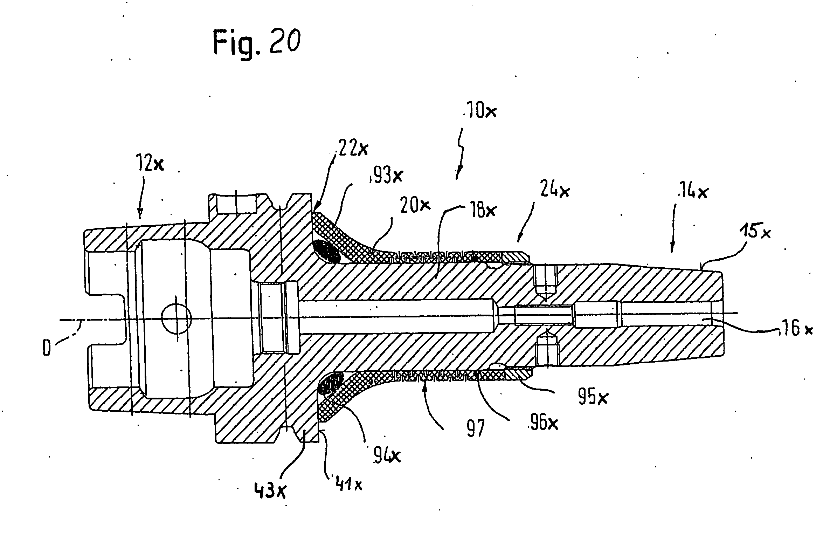

Die Ausgestaltung nach Fig. 20 unterscheidet sich von der Variante der Fig. 19 im Wesentlichen nur dadurch, dass ein Teil der axialen Länge der Hülse 20x als hülsenförmige Wellfeder 97 ausgebildet ist, die sowohl axiale als auch radiale Federkräfte bei axialer bzw. radialer Verspannung erzeugt.

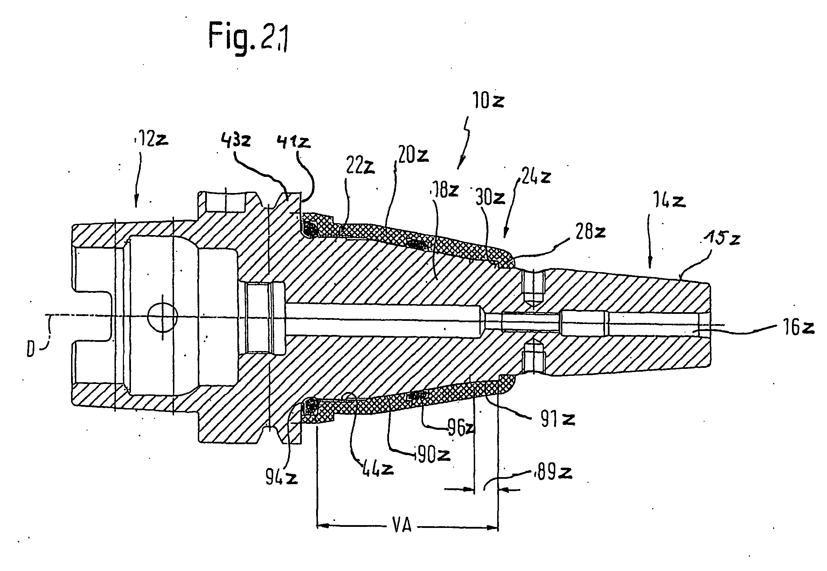

Fig. 21 zeigt einen Werkzeughalter 10z vom Schrumpftyp, der die Prinzipien der Variante der Fig. 19 verwirklicht. Während die der Spann ausbildung 14z benachbarte Stützstelle 24z durch einen radial nach innen ragenden Radialvorsprung 28z, welcher an einer Ringschulter 30z des Spannschafts 18z anliegt, gebildet wird, ist die Hülse 20z auf der Seite der Kopplungsausbildung 12z zur Bildung der Stützstelle 24z mit einem Innengewinde auf ein Außengewinde 44z des Spannschafts 18z geschraubt. Der Stützstelle 24z benachbart umschließt die Hülse 20z in einem Reibschlussabschnitt 89z den Umfang des Schaftsabschnitts 18z. Der Schaftabschnitt 18z hat in diesem Bereich radiales Übermaß und kann, ebenso wie der Innenmantel der Hülse 20z geringfügig konisch ausgebildet sein. die Hülse 20z verläuft im übrigen mit radialem Abstand (Ringspalt 90z) vom Schaftabschnitt 18z. Dämpfungsringe sind bei 94z und 96z erkennbar.

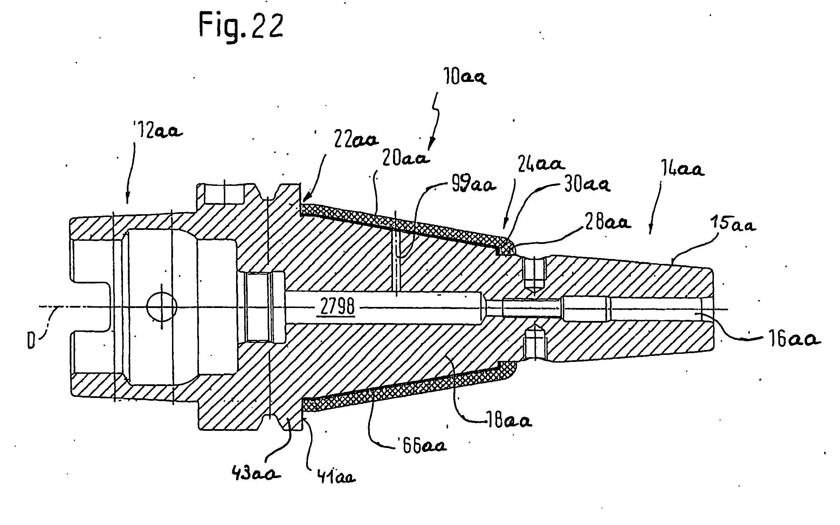

Fig. 22 zeigt einen Werkzeughalter 10aa vom Schrumpftyp ähnlich der Variante der Fig. 13. Auf den hier konusförmigen Spannschaft 18aa ist eine gleichfalls konusförmige Hülse 20aa unter Bildung einer Ringkammer 66aa aufgesetzt und an beiden Stützstellen 22aa und 24aa über den gesamten Umfang dicht und fest mit dem Werkzeughalter 10aa verbunden, hier angeschweißt. Im dargestellten Ausführungsbeispiel sitzt die Hülse 20aa mit ihrem einen Stirnende auf einer ringförmigen Stirnfläche 41aa der Kopplungsausbildung 12aa auf, die den Fuß des Schaftabschnitts 18aa umschließt. An ihrem anderen, die Stützstelle 24aa bildenden Ende ist die Hülse mit einem nach radial innen vorspringenden Ringflansch 28aa versehen, der an einer axial in gleicher Richtung wie die Schulter 41aa weisenden Ringschulter 30aa des Schaftabschnitt 18aa anliegt. Die Hülse 20aa kann deshalb an beiden Stützstellen 22aa und 24aa in einem Arbeitsgang insbesondere durch Reibschweißung mit dem Schaftabschnitt 18aa verbunden werden.

Die Ringkammer 66aa zwischen dem Schaftabschnitt 18aa und der Hülse 20aa ist über einen Zuleitungskanal 99 von außen her zugänglich, hier über einen zentrischen weiteren Kanal 98 des Werkzeughalters 10aa. Zur Erzeugung einer Vorspannkraft wird über die Kanäle 98 und 99 bei der Herstellung des Werkzeughalters 10aa fließfähiges Material in die Ringkammer 66aa gedrückt, welches in der Ringkammer 66aa nachfolgend seine Konsistenz verfestigt. Bei dem Material kann es sich um eine Gummimischung handeln, die in der Kammer 66aa ausvulkanisiert wird. Es kann sich aber auch um ein härtbares Kunststoffmaterial, beispielsweise ein Harz oder dergleichen handeln, welches in der Ringkammer 66aa aushärtet. Ebenso geeignet sind sinterfähige Materialien. Das in die Ringkammer 66aa eingebrachte Material bläht die Hülse 20aa und erzeugt hierdurch die axiale Vorspannkraft VK. Das eingebrachte Material muss in der Lage sein unter dem erhöhten Einbringdruck zu erstarren, so dass es den erhöhten Druck auch im erstarrten Zustand aufrecht erhalten kann. Das Material kann elastische Eigenschaften haben und/oder an der Hülse 20aa bzw. dem Schaftabschnitt 18aa in einem Reibschluss anliegen. Es versteht sich, dass das Material gegebenenfalls auch von außen durch eine Öffnung der Hülse 20aa eingebracht werden kann, wie dies in Fig. 13 angedeutet ist.

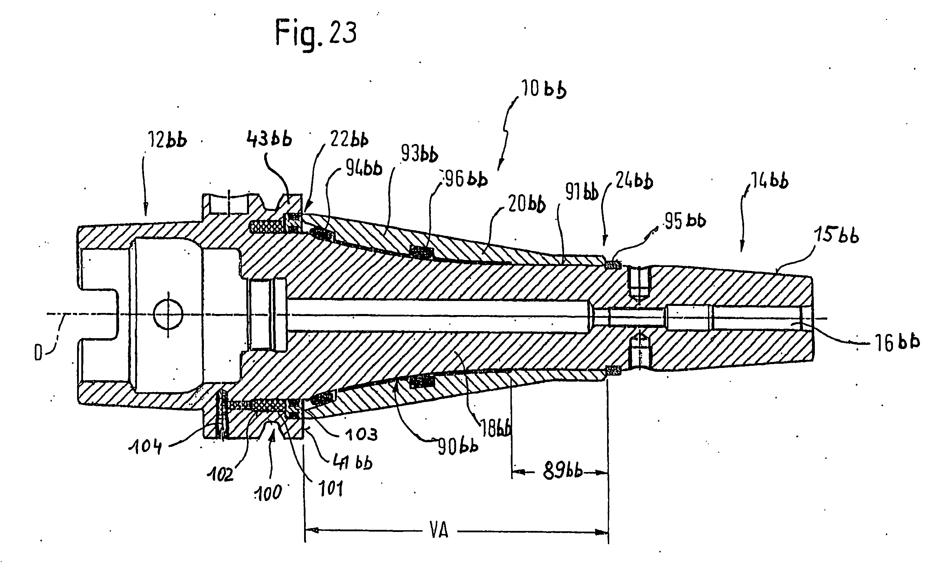

Fig. 23 zeigt eine weitere Variante eines Werkzeughalters 10bb vom Schrumpftyp, bei welchem ähnlich der Variante der Fig. 18 das der Spannausbildung 14bb axial benachbarte Ende der die Verspannungsanordnung bildenden Hülse 20bb in einem Reibschlussabschnitt 89bb an dem Spannschaft 18bb anliegt. Der Reibschlussabschnitt 89bb muss nicht axiale Fixierungskräfte für eine Presssitzfixierung der Hülse 20bb aufbringen. Die Hülse stützt sich mit ihrem der Spannausbildung 14bb benachbarten Ende an einem radial elastischen Sicherungsring 95bb ab, der lösbar in eine Ringnut am Umfang des Spannschafts 18bb eingeschnappt ist. Anstelle des Sicherungsrings 95bb kann ähnlich der Variante der Fig. 19 gegebenenfalls auch eine auf den Spannschaft 18bb aufgeschraubte Mutter vorgesehen sein. Die Umfangskontur des Spannschafts 18bb und der an ihm anliegenden Hülse 20bb kann im Reibschlussabschnitt 89bb wiederum die Form eines selbsthemmenden, steilen Konus 91 bb haben, wie dies anhand der Fig. 18 erläutert wurde. Es versteht sich, dass auch hier, wie bei sämtlichen vorangegangen erläuterten Varianten anstelle des Konus auch ein zylindrischer Reibschlussbereich vorgesehen sein kann. Der Reibschluss wird wiederum durch ein gewisses Übermaß des Durchmessers des Schaftabschnitts 18bb bezogen auf den Innendurchmesser der Hülse 20bb erreicht.

Das der Spannausbildung 12bb axial benachbarte Ende der Hülse 20bb ist an einer hydraulischen Stützanordnung 100 axial abgestützt. Die Stützanordnung 100 hat eine mit einem hydraulischen Druckmedium 101 gefüllte, zur Drehachse D zentrische Ringkammer 102, in der abgedichtet ein Ringkolben 103 axial verschiebbar geführt ist. Die Hülse 20bb stützt sich an dem Ringkolben 103 im Bereich der am Fuß des Schaftabschnitts 18bb gebildeten Ringfläche 41 bb ab. Eine mit den Druckmedium 101 in der Ringkammer 102 kommunizierende Kolbenschraube 104 erlaubt eine variable Druckbelastung des Druckmediums 101 und damit über den Ringkolben 103 eine axiale Verspannung der Hülse 20bb.

Bei dem Druckmedium kann es sich um Hydrauliköl oder dergleichen handeln. Geeignet sind auch fließfähige oder/und gummielastische Materialien oder aber visko-elastische Massen. Es versteht sich, dass der Ringkolben 103 auch integral und einstückig an der Hülse 20bb angeformt sein kann.

Nicht näher dargestellt sind Ausführungsformen, die bei kinematisch inverser Einbaulage der Stützeinrichtung 100 auch eine Zugbelastung der Hülse 20bb zulassen. Es versteht sich ferner, dass die Stützeinrichtung 100 auch bei sämtlichen anderen vorangegangen erläuterten Werkzeughaltern für die axiale Verspannung der Verspannanordnung eingesetzt werden kann.

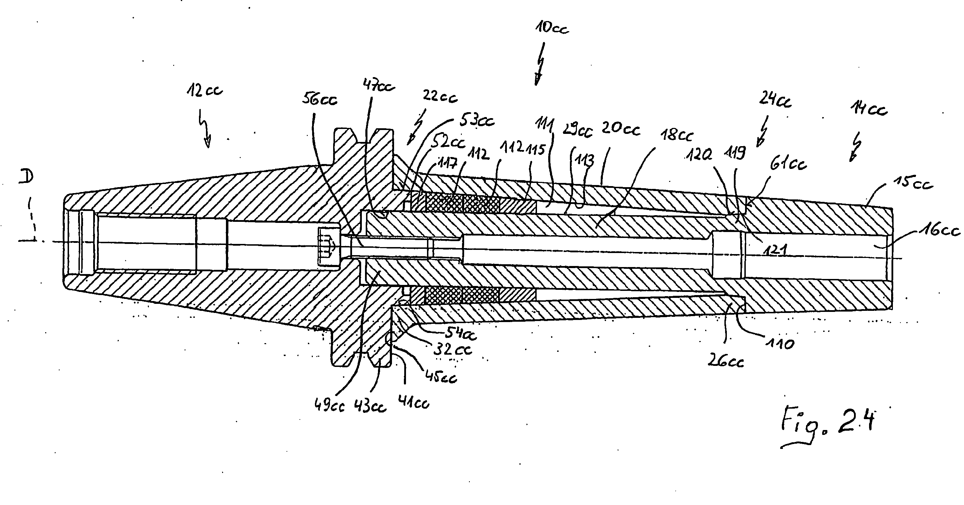

Fig. 24 zeigt eine Variante eines Werkzeughalters 10cc mit einer Grundkonstruktion ähnlich dem Werkzeughalter 10h in Fig. 6. Der Werkzeughalter 10cc hat eine zwischen den Stützstellen 22cc und 24cc der Kopplungsausbildung 12cc einerseits und der Spannausbildung 14cc andererseits auf Druck eingespannte, im Wesentlichen konische Hülse 20cc, die sich mit der Stirnfläche 45cc ihres im Durchmesser größeren Ende 32cc unter Bildung einer Fuge an der achsnormal verlaufenden Stirnfläche 41cc des Ringflansches 43cc der Kopplungsausbildung 12cc abstützt. Das im Durchmesser kleinere Ende 26cc der Hülse 20cc ist mit seiner Stirnfläche 61cc unter Bildung einer Fuge an einer Ringschulter 110 der Spannausbildung 14cc abgestützt. Die an den Stützstellen 22cc und 24cc gebildeten Fugen haben vibrationsmindernde Eigenschaften.

Zusätzlich ist die Hülse 20cc im Bereich ihrer Stirnenden radial mit leichtem Presssitz zentriert. An der Kopplungsausbildung 12cc ist ein Ringbund 52cc angeformt, dessen der Konizität der Hülse 20cc angepasste äußere Umfangsfläche 53cc die Hülse 20cc an ihrer inneren Umfangsfläche 54cc zentriert. Im Bereich der Stützstelle 24cc ist die Spannausbildung 14cc mit einem Ringansatz 119 versehen, dessen äußere Umfangsfläche 120 im leichten radialen Presssitz an der inneren Umfangsfläche 121 der Spannausbildung 14cc anliegt und die Hülse 20cc radial zentriert.

Die Hülse 20cc besteht aus Hartmetall, beispielsweise feinkörnigem Hartmetall, z. B. vom Typ K20, oder aber grobkörnigem Hartmetall, z. B. vom Typ K50. Die Hülse kann aber auch aus einem Schwermetall oder einem Metall-Matrix-Komposite-Material (MMC), zum Beispiel Ferro-Titanit, bestehen. Als Material für die Hülse 20cc eignet sich auch Keramik oder Glasfaser- bzw. Kohlefaser-verstärkter Kunststoff. Es versteht sich, dass die Hülse 20cc aber auch aus Werkzeugstahl bestehen kann, wenngleich die vorstehend erläuterten Materialien bevorzugt sind. Es versteht sich ferner, dass die vorangegangen erläuterten Hülsen gleichfalls aus den bevorzugten Materialien bestehen können.

Die Spannausbildung 14cc ist integral einteilig mit einem zylindrischen Schaftabschnitt 18cc verbunden, dessen freies Ende in einer Ringaussparung 47cc der Kopplungsausbildung 12cc zentriert, jedoch radial verschiebbar geführt ist. Eine Spannschraube 56cc spannt den Schaftabschnitt 18cc gegen die Kopplungsausbildung 12cc und sorgt damit für eine Druckvorspannung der Hülse 20cc. Es versteht sich, dass anstelle der Spannschraube 56cc auch andere kraftübertragende Fixierungsmittel vorgesehen sein können, wie sie für die Fixierung des Spannschafts in der Kopplungsausbildung anhand der Fig. 2, 3, 7, 11 und 16 erläutert wurden.

Die konische Hülse 20cc verläuft zwischen den Stützstellen 22cc und 24cc unter Bildung einer konusförmigen Ringkammer 111 mit radialem Abstand zum Schaftabschnitt 18cc. In der Ringkammer 111 sind wenigstens ein, hier mehrere, ringförmige Dämpfungselemente 112 angeordnet, die mit radialer Vorspannung am Außenumfang 29cc des Schaftabschnitts 18cc einerseits und am Innenumfang 113 der Hülse 20cc andererseits reibschlüssig anliegen. Die Dämpfungselemente 112 bestehen aus gummielastischem oder steifelastischem Material und sind zwischen zwei Anschlagringen 115, 117 axial fixiert. Bei Torsionsschwingungen des Schaftabschnitts 18cc relativ zur Hülse 20cc wie auch bei Biegeschwingungen dämpfen die Dämpfungselemente 112 die Schwingungen.

Die Dämpfungselemente 112 können radiales Übermaß relativ zum Innenumfang 113 bzw. Außenumfang 29cc haben, so dass sie mit radialem Presssitz in der Ringkammer 111 sitzen. Zusätzlich oder auch alternativ kann die radiale Vorspannung der Dämpfungselemente 112 aber auch durch axiales Verspannen zwischen den beiden Anschlagringen 115, 117 erfolgen, indem die das Ende 32cc der Hülse 20cc an der Kopplungsausbildung 12cc zentrierende Ringschulter 52cc den ihr benachbarten Anschlagring 117 um ein vorbestimmtes Maß gegen den anderen, in der Ringkammer 111 sich abstützenden Anschlagring 115 stellt. Die radiale Verspannung wird hierbei durch Verringerung des axialen Abstands der Anschlagringe 115, 117 erreicht. Zusätzlich oder alternativ können die Dämpfungselemente 112 zur Erhöhung der radialen Vorspannung in den sich verjüngenden Spalt der Ringkammer 111 eingetrieben werden.

Die Hülse 20cc kann, wie bei sämtlichen vorangegangen beschriebenen Ausführungsformen aus Werkzeugstahl bestehen, ist aber vorzugsweise zur Verbesserung der Dämpfungseigenschaften aus Hartmetall gefertigt, wie dies auch bei den vorangegangen erläuterten Ausführungsformen der Fall sein kann.

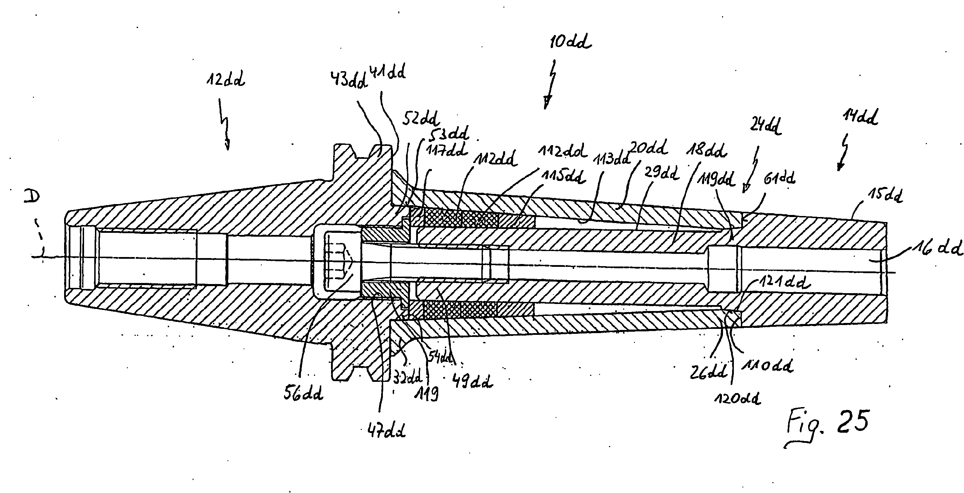

Fig. 25 zeigt einen Werkzeughalter 10dd, der sich von dem Werkzeughalter der Fig. 24 in erster Linie dadurch unterscheidet, dass sich der Anschlagring 117dd nicht an der das Ende 32dd der Hülse 20dd zentrierenden Ringschulter 52dd abstützt, sondern an einer Gewindehülse 119, die in eine zentrische Gewindeöffnung 47dd der Kopplungsausbildung 12dd geschraubt ist. Die Gewindehülse 119 erlaubt eine Justierung des axialen Abstands zwischen den Anschlagringen 115dd und 117dd und damit eine Justierung der radialen Vorspannung der Dämpfungselemente 112dd. Der Endbereich 49dd des Schaftabschnitts 18dd ist mittels eines Schraubbolzens 56dd auf Zug gegen die Kopplungsausbildung 12dd gespannt, um so die Hülse 20dd auf Druck vorzuspannen. Es versteht sich, dass das Ende 49dd des Schaftabschnitts 18dd die Gewindehülse 119 gegebenenfalls auch durchsetzen kann und in der Gewindehülse 119 oder aber der Kopplungsausbildung 12dd zentriert sein kann. Soweit das Ende 49dd in der Kopplungsausbildung 12dd zentriert ist, kann das Ende 49dd auch anderweitig auf Zug belastbar mit der Kopplungsausbildung 12dd verbunden sein, wie dies für kraftschlüssige oder formschlüssige Verbindungen vorangegangen erläutert wurde.

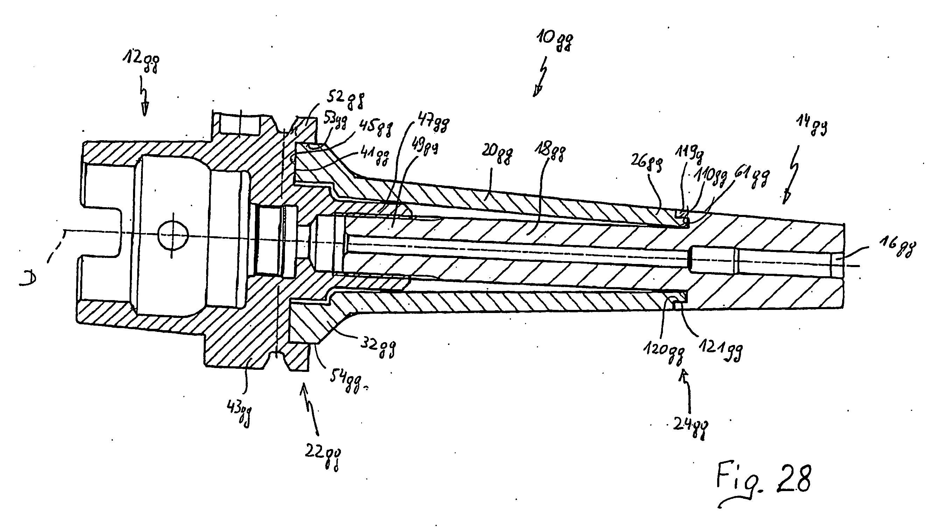

Figur 28 zeigt eine Variante des Werkzeughalters aus Figur 24, der im Unterschied zu diesem Werkzeughalter jedoch keine Dämpfungselemente 112 zwischen seinem Schaftabschnitt 18ee und seiner Hülse 20ee enthält. Darüber hinaus ist der Schaftabschnitt 18ee ähnlich Figur 7 mit seinem freien Ende 49ee in eine Gewindeöffnung 47ee der Kopplungsausbildung 12ee eingeschraubt. Während die Spannstelle 12ee unter Bildung einer Fuge in der anhand von Figur 24 erläuterten Weise radial zentriert ist, umschließt der Ringansatz 119ee das axiale Ende 26ee der Hülse 20ee von radial außen und liegt mit seiner inneren Umfangsfläche 120ee unter Bildung einer Fuge an der äußeren Umfangsfläche 121ee der Hülse 20ee an. Dies hat den Vorteil, dass Wärmedehnungen der als Schrumpffutter ausgebildeten Spannausbildung 14ee das Ende 26ee der Hülse 20ee nicht beeinflussen und es dementsprechend nicht zu Wärmedehnungsschäden an der Hülse 20ee kommen kann. Dies ist insbesondere von Vorteil, wenn die Hülse 20ee, wie vorangegangen erläutert, aus sprödem Material, wie z. B. Keramik oder dgl., besteht.

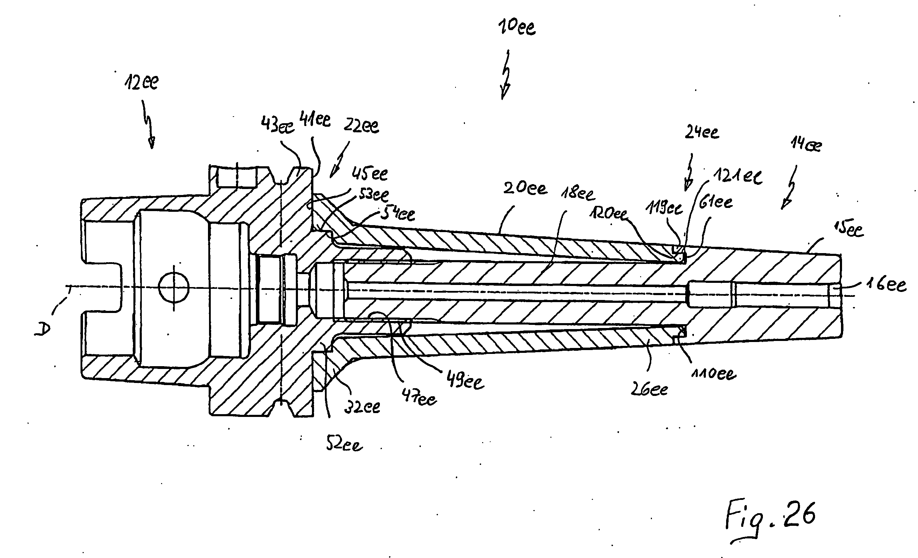

Der in Figur 28 dargestellte Werkzeughalter 10ff unterscheidet sich von dem Werkzeughalter der Figur 26 lediglich dadurch, dass der das der Spannausbildung 14ff zugewandte Ende 26ff der Hülse 20ff radial zentrierende Ansatz nicht einteilig mit der Spannausbildung 14ff verbunden ist, sondern durch einen gesonderten, beispielsweise aus Stahl oder dgl. bestehenden Stützring 119ff gebildet ist, der mit seiner inneren Umfangsfläche 120ff sowohl die äußere Umfangsfläche 121ff der Hülse 20ff als auch eine äußere Umfangsfläche 122 der Spannausbildung 14ff mit leichtem radialen Presssitz umschließt. Der Ring 119ff zentriert das Ende 26ff der Hülse 20ff relativ zur Spannausbildung 14ff. Während die innere Umfangsfläche 120ee des Werkzeughalters 10ee in Figur 26 vergleichsweise hohen Herstellungsaufwand erfordert, kann die Innenfläche 120ff des Rings 119ff kostengünstig als Passfläche hergestellt werden. Die Hülse 20ff besteht aus den vorstehend anhand der Figur 24 erläuterten Materialien.

Figur 28 zeigt einen Werkzeughalter 10gg ähnlich dem Werkzeughalter 10ee in Figur 26. Im Unterschied zum Werkzeughalter 10ee ist jedoch das der Kopplungsausbildung 12gg benachbarte Ende 32gg der Hülse 20gg durch einen Ringbund 52gg radial außen zentriert, wie dies anhand von Figur 5 bereits erläutert wurde. Allerdings ist die Stützstelle 22gg in diesem Fall als Fuge ausgebildet. Der die Hülse 20gg radial außen in leichtem Presssitz zentrierende Ringbund 52gg der Kopplungsausbildung 12gg kann aufgrund der axialen Verspannkraft entstehende Spreizkräfte der konisch ausgestellten Hülse 20gg aufnehmen, ohne dass Zentrierfehler auftreten.

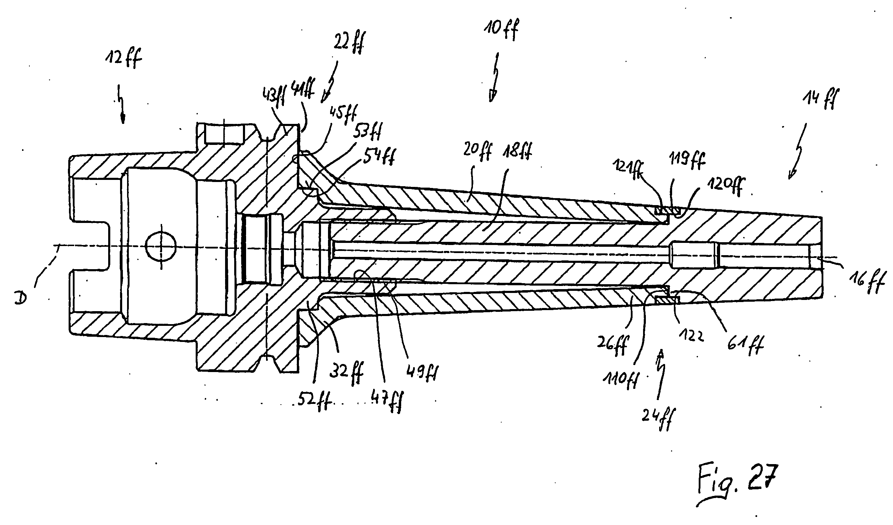

Die in den Figuren 1 bis 28 dargestellten Merkmale der Werkzeughalter sind untereinander beliebig kombinierbar.

## Patentansprüche

1. Werkzeughalter für ein um eine Drehachse (D) drehbares Werkzeug, insbesondere Bohr-, Fräs-, Reib- oder Schleifwerkzeug, umfassend einen Spannschaft, welcher an seinem einen Endbereich eine Spannausbildung (14) zur koaxialen Halterung des Werkzeugs und an seinem anderen Endbereich eine Kopplungsausbildung (12) zur koaxialen Kopplung mit einer Werkzeugmaschine aufweist, wobei mit dem Spannschaft eine Verspannungsanordnung verbunden ist, die in einem in axialer Richtung zwischen der Spannausbildung (14) und der Kopplungsausbildung (12) angeordneten axialen Verspannungsabschnitt des Spannschafts eine Verspannungskraft mit einer in axialer Richtung wirkenden Verspannungskraftkomponente auf den Spannschaft ausübt und wobei in dem Verspannungsabschnitt von den den Spannschaft und die Verspannungsanordnung bildenden Komponenten zumindest die Verspannungsanordnung als Hülse (20b, c, f-s, u-x, z, aa-gg) ausgebildet ist, die den Spannschaft (18) koaxial umschließt und wobei die Spannausbildung (14) über die Hülse vorsteht,
**dadurch gekennzeichnet, dass**
die Hülse (20b, c, f-s, u-x, z, aa-gg) zumindest angenähert konische Form und einen zu ihrem der Kopplungsausbildung (12) benachbarten Ende hin sich vergrößernden Außen- oder/und Innendurchmesser hat, und die Spannausbildung (14) für eine Schrumpfsitzhalterung des Werkzeugs ausgebildet ist.

2. Werkzeughalter nach Anspruch 1, **dadurch gekennzeichnet, dass** die Hülse (20b, c, f, k-p, s, u, z, aa) voneinander weg auf Zug belastbar an dem Werkzeughalter (10) abgestützt ist und der Spannschaft einen Schaftabschnitt (18) umfasst, der die Koppelausbildung (12) auf Druck belastbar mit der Spannausbildung (14) verbindet.

3. Werkzeughalter nach Anspruch 2, **dadurch gekennzeichnet, dass** die Hülse (20) an ihrem der Spannausbildung (14) nahen Ende (26) eine von der Kopplungsausbildung (12) weg weisende Ringschulter (30b, c, f, k-p, s, u, z, aa) des Spannschafts hintergreift und an ihrem anderen Ende (32) an dem Werkzeughalter angeschraubt oder mit dem Werkzeughalter insbesondere durch unlösbares Fügen, insbesondere Schweißen, fest verbunden ist.

4. Werkzeughalter nach Anspruch 3, **dadurch gekennzeichnet, dass** die Hülse (20) an dem anderen Ende (32) einen radial nach außen abstehenden Ringbund (34) hat, der gegen eine radial nach außen sich erstreckende Ringschulter (43) der Kopplungsausbildung (12) geschraubt ist.

5. Werkzeughalter nach Anspruch 4, **dadurch gekennzeichnet, dass** die Hülse (20f) an dem anderen Ende (32) ein Innengewinde (44f) hat, das auf ein Außengewinde (46f) des Spannschafts geschraubt ist.

6. Werkzeughalter nach Anspruch 3, **dadurch gekennzeichnet, dass** die Hülse (20b, c, n, s) an ihrem der Spannausbildung (14) nahen Ende (26) eine von der Kopplungsausbildung (12) weg weisende Ringschulter (33b, c, n) des Werkzeughalters im Bereich der Spannausbildung (14) hintergreift oder einteilig mit dem Werkzeughalter verbunden ist und an ihrem anderen Ende (32b, c, n, s) einteilig mit dem Werkzeughalter, insbesondere einem radial nach außen abstehenden Ringbund (43) der Kopplungsausbildung (12) verbunden ist und dass der Spannschaft in dem Verspannungsbereich kraft- und formschlüssig an einer zur Kopplungsausbildung (12) festen Fläche des Werkzeughalters abgestützt ist.

7. Werkzeughalter nach Anspruch 3, **dadurch gekennzeichnet, dass** die Hülse (20s) einstückig fest, insbesondere integral sowohl mit der Spannausbildung (14s) als auch der Kopplungsausbildung (12s) verbunden ist und der Bereich der Spannausbildung über den Schaftabschnitt (18s) an dem Bereich der Kopplungsausbildung (12s) abgestützt ist.

8. Werkzeughalter nach Anspruch 7, **dadurch gekennzeichnet, dass** der Schaftabschnitt (18s) als von der Spannausbildung (14s) und der Kopplungsausbildung (12s) gesondertes Bauteil ausgebildet ist.

9. Werkzeughalter nach Anspruch 1, **dadurch gekennzeichnet, dass** die Hülse (20g, h-k, q, r, u-x, bb, cc, dd, ee, ff, gg) an ihren Enden (26, 32) aufeinander zu auf Druck belastbar an dem Werkzeughalter abgestützt ist und der Spannschaft einen Schaftabschnitt (18) umfasst, der die Kopplungsausbildung (12) auf Zug belastbar mit der Spannausbildung (14) verbindet.

10. Werkzeughalter nach Anspruch 9, **dadurch gekennzeichnet, dass** die Hülse (20g, h, i, q, r, w, x, cc, dd, ee, ff, gg) mit einem ihrer axialen Enden an der Kopplungsausbildung (12), insbesondere an einem radial abstehenden Ringbund (43) der Kopplungsausbildung (12) abgestützt ist und mit ihrem anderen Ende an einer Ringschulter eines relativ zur Kopplungsausbildung axial verschraubbaren oder über eine Presssitzverbindung axial justierbaren Bauteils (18h, i, cc, dd, ee, gg, 56, 56n, 58, 80, 95) abgestützt ist.

11. Werkzeughalter nach Anspruch 10, **dadurch gekennzeichnet, dass** das Bauteil als auf den Spannschaft geschraubter Schraubring (56) ausgebildet ist.

12. Werkzeughalter nach Anspruch 11, **dadurch gekennzeichnet, dass** die Ringschulter an dem Spannschaft (18h, i, cc, dd, ee, gg) angeformt ist und der Spannschaft mit dem Bereich der Kopplungsausbildung verschraubt ist.

13. Werkzeughalter nach Anspruch 10, **dadurch gekennzeichnet, dass** das andere Ende der Hülse (20q) an einer Ringschulter des in der Spannausbildung gehaltenen Werkzeugs (80) abgestützt ist.

14. Werkzeughalter nach Anspruch 10, **dadurch gekennzeichnet, dass** die Ringschulter (79r) an der Spannausbildung (14r) angeformt ist und diese axial verlagerbar an dem Spannschaft (18r) befestigt ist.

15. Werkzeughalter nach Anspruch 9, **dadurch gekennzeichnet, dass** die Hülse (20v) mit einem ihrer axialen Enden an der Kopplungsausbildung (12), insbesondere einem radial abstehenden Ringbund (43) der Kopplungsausbildung (12) abgestützt ist und mit ihrem anderen Ende reibschlüssig an dem Spannschaft (18v) abgestützt ist.

16. Werkzeughalter nach einem der Ansprüche 1 bis 15, **dadurch gekennzeichnet, dass** die Hülse (20o) mehrere koaxial zueinander angeordnete Hülsenmäntel (67, 68) umfasst.

17. Werkzeughalter nach Anspruch 16, **dadurch gekennzeichnet, dass** die Hülsenmäntel (67, 68) zumindest in einem Teilabschnitt ihrer axialen Länge aneinander anliegen.

18. Werkzeughalter nach Anspruch 16 oder 17, **dadurch gekennzeichnet, dass** einer der Hülsenmäntel (67, 68) auf Druck und ein anderer der Hülsenmäntel (67, 68) auf Zug beansprucht ist.

19. Werkzeughalter nach einem der Ansprüche 1 bis 18, **dadurch gekennzeichnet, dass** radial zwischen der Hülse (20p, aa) und dem Schaftabschnitt (18) ein Ringraum (66) gebildet ist, der mit einem unter Druck stehenden Material, insbesondere einem fließfähigen Material oder einem plastisch verformbaren oder elastischen Material ausgefüllt ist.

20. Werkzeughalter nach Anspruch 19,
**dadurch gekennzeichnet, dass** die axialen Enden der Hülse (20p, aa) zugfest und dicht mit dem Werkzeughalter (10) verbunden, insbesondere reibverschweißt sind,
dass die Hülse (20) den Spannschaft (18) mit radialem Abstand umschließt und zur Erzeugung einer axialen Zugverspannung der Hülse (20) zwischen dem Spannschaft (18) und der Hülse (20) unter Druck stehendes Material, insbesondere elastisches Material, eingefügt ist.

21. Werkzeughalter nach Anspruch 19 oder 20, **dadurch gekennzeichnet, dass** Druckveränderungsmittel (76) vorgesehen sind, mittels der der Druck des Materials in dem Ringraum (66) veränderbar ist.

22. Werkzeughalter nach einem der Ansprüche 1 bis 23, **dadurch gekennzeichnet, dass** der Schaftabschnitt (18) oder die Hülse (20) - soweit diese Komponente auf Druck beansprucht ist - über ein Dämpfungsstück (59) relativ zu der anderen, auf Zug beanspruchten Komponente axial abgestützt ist.

23. Werkzeughalter nach einem der Ansprüche 1 bis 22,
**dadurch gekennzeichnet, dass** die Hülse (20v-z, bb) zumindest auf einem Teilbereich ihrer axialen Länge reibschlüssig am Umfang des Spannschafts (18) anliegt.

24. Werkzeughalter nach Anspruch 23,
**dadurch gekennzeichnet, dass** die Hülse (20v-z, bb) mit ihren beiden Enden axial vorgespannt an dem Werkzeughalter (10) abgestützt ist, wobei das der Spannausbildung (14) axial nahe Ende der Hülse (20) in einem Reibschlussabschnitt (89) im Presssitz reibschlüssig axial fixiert an dem Spannschaft (18) gehalten ist.

25. Werkzeughalter nach Anspruch 23 oder 24,
**dadurch gekennzeichnet, dass** die Hülse (20v-z, bb) und der Spannschaft (18v) zumindest in einem Teil des Reibschlussabschnitts (89) aneinander angepasst geringfügig konische Form haben.

26. Werkzeughalter nach einem der Ansprüche 23 bis 25,
**dadurch gekennzeichnet, dass** die Hülse (20v-x, bb) axial auf Druck vorgespannt an dem Werkzeughalter (10) abgestützt ist und axial zwischen dem Reibschlussabschnitt (89) und dem axial der Kopplungsausbildung (12) zugewandten, an dem Werkzeughalter (10) abgestützten Ende den Spannschaft (18) mit radialem Abstand umschließt.

27. Werkzeughalter nach Anspruch 26,
**dadurch gekennzeichnet, dass** axial zwischen dem Reibschlussabschnitt (89) und den am Werkzeughalter (10v) abgestützten anderen Ende wenigstens ein Dämpfungsring (94) aus einem elastisch komprimierbaren Material zwischen dem Umfang des Spannschafts (18) und dem Innenmantel der Hülse (20v) angeordnet ist.

28. Werkzeughalter nach einem der Ansprüche 1 bis 27,
**dadurch gekennzeichnet, dass** der Spannschaft (18) in eine Ringschulter (41) der Kopplungsausbildung (12) übergeht und die Hülse (20) an der Ringschulter (41) axial abgestützt ist und dass zumindest das an der Ringschulter (41) abgestützte Ende (32) der Hülse (20b, c, f-s, u-x, aa-gg) als Konusabschnitt ausgebildet ist, der sich von der Ringschulter (41) weg axial verjüngt.

29. Werkzeughalter nach Anspruch 28,
**dadurch gekennzeichnet, dass** der Konusabschnitt wenigstens einen Dämpfungsring (94, 112) überdeckt.

30. Werkzeughalter nach Anspruch 28 oder 29,
**dadurch gekennzeichnet, dass** die Hülse axial auf Druck vorgespannt ist.

31. Werkzeughalter nach einem der Ansprüche 1 bis 30,
**dadurch gekennzeichnet, dass** die Hülse (20x) einen axial federnden Wellfederabschnitt (97) umfasst.

32. Werkzeughalter nach einem der Ansprüche 1 bis 31,
**dadurch gekennzeichnet, dass** die Hülse (20bb) mit ihren beiden Enden axial an dem Werkzeughalter (10) abgestützt ist, wobei im Abstützweg eines der beiden Enden der Hülse (20bb) eine relativ zu dem Werkzeughalter (10) axial bewegliche Stützeinrichtung (100) angeordnet ist, die wenigstens einen Stützkolben (103) aufweist, der in einer ihm zugeordneten, ein fließfähiges oder plastisch deformierbares Druckmedium (101) enthaltenden Druckkammer (102) axial verschiebbar geführt ist, wobei der Druckkammer (102) ein Einstellelement (104) zur Veränderung des Drucks in dem Druckmedium (101) zugeordnet ist.

33. Werkzeughalter nach Anspruch 32,
**dadurch gekennzeichnet, dass** der Stützkolben (103) als in einem die Druckkammer (102) bildenden Ringraum axial verschiebbarer Ringkolben ausgebildet ist, an dem das eine der beiden Enden der Hülse (20bb) abgestützt ist oder mit dem es verbunden ist.

34. Werkzeughalter nach Anspruch 32 oder 33,
**dadurch gekennzeichnet, dass** das Einstellelement (104) eine auf das Druckmedium (101) einwirkende Kolbenschraube ist.

35. Werkzeughalter nach einem der Ansprüche 32 bis 34,
**dadurch gekennzeichnet, dass** das andere der beiden Enden der Hülse (20bb) fest mit dem Spannschaft (18) verbunden ist oder an einem Ringbund des Spannschafts (18), insbesondere einem lösbar an dem Spannschaft (18) gehaltenen Sicherungsring (95bb) axial abgestützt ist.

36. Werkzeughalter nach einem der Ansprüche 1 bis 35, **dadurch gekennzeichnet, dass** die Hülse (20cc) den Schaftabschnitt (18) zumindest in einem Teilbereich ihrer axialen Länge unter Bildung eines Ringraums (111) mit radialem Abstand umschließt und in dem Ringraum (111) ein ringförmiges, an der inneren Umfangsfläche (113) der Hülse und der äußeren Umfangsfläche (29cc) des Schaftabschnitts (18cc) flächig anliegendes Dämpfungselement (112) radial vorgespannt angeordnet ist.

37. Werkzeughalter nach Anspruch 36, **dadurch gekennzeichnet, dass** das Dämpfungselement (112) aus elastisch komprimierbarem Material besteht und dass der Ringraum (111) durch Ringschultern (115, 117) axial begrenzt ist, zwischen welchen das Dämpfungselement (112) zur Erzeugung radialer Vorspannung axial verspannt ist.

38. Werkzeughalter nach Anspruch 37, **dadurch gekennzeichnet, dass** eine der Ringschultern (117dd) für die Veränderung der Vorspannung des Dämpfungselements (112) axial verlagerbar ist.

39. Werkzeughalter nach Anspruch 38, **dadurch gekennzeichnet, dass** die axial verlagerbare Ringschulter (117dd) durch eine an der Kopplungsausbildung (12dd) gehaltene, axial verlagerbare Schraubanordnung (119) gebildet ist.

40. Werkzeughalter nach Anspruch 36 bis 39, **dadurch gekennzeichnet, dass** der Ringraum (111) Konusform hat.

41. Werkzeughalter nach Anspruch 40, **dadurch gekennzeichnet, dass** das Dämpfungselement (112) in Richtung der Verjüngung des konusförmigen Ringraums (111) vorgespannt ist.

42. Werkzeughalter nach einem der Ansprüche 1 bis 41, **dadurch gekennzeichnet, dass** die Hülse (20m, n, o) den Schaftabschnitt (18) zumindest in einem Teilbereich ihrer axialen Länge unter Bildung eines Ringraums mit radialem Abstand umschließt und dass auf dem Schaftabschnitt (18) in dem Ringraum ein Tilgermassenkörper (65m, n, o) angeordnet ist.

43. Werkzeughalter nach Anspruch 42, **dadurch gekennzeichnet, dass** der Tilgermassenkörper (65m, n, o) längs des Schaftabschnitts (18) verlagerbar ist.

44. Werkzeughalter nach einem der Ansprüche 1 bis 43, **dadurch gekennzeichnet, dass** die beiden Komponenten - Spannschaft und Verspannungsanordnung - aus unterschiedlichen Materialien bestehen.

45. Werkzeughalter nach Anspruch 44, **dadurch gekennzeichnet, dass** eine der Komponenten, insbesondere die Hülse (20), zumindest in ihrem die axiale Verspannungskraft übertragenden Bereich aus Hartmetall oder Schwermetall oder einem Metall-Matrix-Komposite-Material oder Keramik oder Kunststoff, insbesondere Glasfaser- oder Kohlefaser-verstärktem Kunststoff, besteht.

46. Werkzeughalter nach einem der Ansprüche 1 bis 45, **dadurch gekennzeichnet, dass** eine der beiden Komponenten - Spannschaft und Verspannungsanordnung - über wenigstens eine die axiale Verspannkraft übertragende Fuge (22, 22a, h, i, q, r, s, v - z, aa - gg, 24, 24a - i, n, q, r, v - z, aa - gg) an der anderen der beiden Komponenten abgestützt ist.

47. Werkzeughalter nach Anspruch 46, **dadurch gekennzeichnet, dass** die Fuge (24v - z, bb) zwischen zwei in radialem Presssitz aneinander liegenden Umfangsflächen der beiden Komponenten vorgesehen ist.

48. Werkzeughalter nach Anspruch 46 oder 47, **dadurch gekennzeichnet, dass** die Fuge (22, 22a, h, i, q, r, s, v - z, aa - dd, 24, 24a - i, n, q, r, w - z, aa - gg) zwischen zwei axial aneinander liegenden Flächen der beiden Komponenten vorgesehen ist.

49. Werkzeughalter nach einem der Ansprüche 46 bis 48, **dadurch gekennzeichnet, dass** zwischen den beiden die Fuge bildenden Flächen eine Dämpfungsmaterialschicht (59; 59t) angeordnet ist.

50. Werkzeughalter nach einem der Ansprüche 46 bis 49, **dadurch gekennzeichnet, dass** zumindest eine der beiden axialen Stirnenden der die Hülse bildenden Komponente eine der aneinander liegenden Flächen der Fuge bildet und an der anderen der beiden Komponenten eine Umfangsfläche (120) angeformt oder angebracht ist, die die Hülse im Bereich dieses Stirnendes radial zentriert.

51. Werkzeughalter nach Anspruch 50, **dadurch gekennzeichnet, dass** an beiden Stirnenden der Hülse jeweils die Fuge bildende Flächen vorgesehen sind und die Hülse im Bereich beider Stirnenden durch Umfangsflächen der anderen Komponente radial zentriert ist.

52. Werkzeughalter nach Anspruch 50 oder 51, **dadurch gekennzeichnet, dass** die Umfangsfläche der anderen Komponente in radialem Presssitz an einer Umfangsfläche der Hülse anliegt.

53. Werkzeughalter nach einem der Ansprüche 50 bis 52, **dadurch gekennzeichnet, dass** die Umfangsfläche der anderen Komponente die Hülse im Bereich zumindest eines ihrer axialen Stirnenden radial außen umschließt.

54. Werkzeughalter nach Anspruch 53, **dadurch gekennzeichnet, dass** die Umfangsfläche der anderen Komponente zumindest das der Spannausbildung benachbarte Stirnende der Hülse radial außen umschließt.

55. Werkzeughalter nach Anspruch 53 oder 54, **dadurch gekennzeichnet, dass** die die Hülse (20ff) im Bereich zumindest eines ihrer Stirnenden, insbesondere im Bereich ihres der Spannausbildung (14ff) benachbarten Stirnendes (26ff) radial außen umschließende Umfangsfläche der anderen der beiden Komponenten durch einen die Fuge axial überdeckenden, auch die andere Komponente radial außen umschließenden Ring (119ff) gebildet ist.

## Claims

1. Tool holder for a tool which can rotate about an axis of rotation (D) in particular a drilling, milling, reaming or grinding tool, comprising a clamping shank which, at one end region, has a clamping formation (14) for securing the tool coaxially and, at its other end region has a coupling formation (12) for coaxial coupling to a machine tool, wherein connected to the clamping shank is a bracing arrangement which, in an axial bracing section, which is arranged in the axial direction between the clamping formation (14) and the coupling formation (12), of the clamping shank, subjects the clamping shank to a bracing force with a bracing-force component acting in the axial direction on the clamping shank, it being the case that, in the bracing section, of the components which form the clamping shank and the bracing arrangement, at least the bracing arrangement is designed as a sleeve (20b, c, f-s, u-x, z, aa-gg) which encloses the clamping shank (18) coaxially, and wherein the clamping formation (14) projects beyond the sleeve,
**characterized in that**
the sleeve (20b, c, f-s, u-x, z, aa-gg) has an at least approximately conical shape and an outer and/or inner diameter which increases toward its end which is adjacent to the coupling formation (12), and the clamping formation (14) is designed for securing the tool with a shrink fit.

2. Tool holder according to Claim 1, **characterized in that** the sleeve (20b, c, f, k-p, s, u, z, aa) is supported on the tool holder (10) such that its ends can be pushed away from one another under tensile loading, and the clamping shank comprises a shank section (18) which connects the coupling formation (12) to the clamping formation (14) such that it can be subjected to compressive loading.

3. Tool holder according to Claim 2, **characterized in that** at its end (26), which is in the vicinity of the clamping formation (14), the sleeve (20) engages behind an annular shoulder (30b, c, f, k-p, s, u, z, aa) of the clamping shank, this annular shoulder being oriented away from the coupling formation (12), and at its other end (32), the sleeve is screwed to the tool holder or fixed to the tool holder in particular by a non-releasable joining method, in particular welding.

4. Tool holder according to Claim 3, **characterized in that**, at the other end (32), the sleeve (20) has a radially outwardly projecting annular collar (34) which is screwed against a radially outwardly extending annular shoulder (43) of the coupling formation (12).

5. Tool holder according to Claim 4, **characterized in that**, at the other end (32), the sleeve (20f) has an internal thread (44f) which is screwed on to an external thread (46f) of the clamping shank.

6. Tool holder according to Claim 3, **characterized in that**, at its end (26), which is in the vicinity of the clamping formation (14), the sleeve (20b, c, n, s) engages behind an annular shoulder (33b, c, n) of the tool holder in the region of the clamping formation (14), this annular shoulder being oriented away from the coupling formation (12), or is connected integrally to the tool holder and, at its other end (32b, c, n, s), the sleeve is connected integrally to the tool holder, in particular to a radially outwardly projecting annular collar (43) of the coupling formation (12), and **in that**, in the bracing region, the clamping shank is supported in a force-fitting and form-fitting manner on a tool holder surface which is fixed to the coupling formation (12).

7. Tool holder according to Claim 3, **characterized in that** the sleeve (20s) is fixed, in particular connected integrally, both to the clamping formation (14s) and to the coupling formation (12s), and the region of the clamping formation is supported on the region of the coupling formation (12s) via the shank section (18s).

8. Tool holder according to Claim 7, **characterized in that** the shank section (18s) is designed as a component which is separate from the clamping formation (14s) and the coupling formation (12s).

9. Tool holder according to Claim 1, **characterized in that** the sleeve (20g, h-k, q, r, u-x, bb, cc, dd, ee, ff, gg) is supported on the tool holder at its ends (26, 32) such that the latter can be pushed toward one another under compressive loading, and the clamping shank comprises a shank section (18) which connects the coupling formation (12) to the clamping formation (14) such that it can be subjected to tensile loading.

10. Tool holder according to Claim 9, **characterized in that** the sleeve (20g, h, i, q, r, w, x, cc, dd, ee, ff, gg) has one of its axial ends supported on the coupling formation (12), in particular on a radially projecting annular collar (43) of the coupling formation (12), and has its other end supported on an annular shoulder of a component (18h, i, cc, dd, ee, gg, 56, 56n, 58, 80, 95) which can be screw-connected axially relative to the coupling formation or which can be aligned axially by means of a press fit connection.

11. Tool holder according to Claim 10, **characterized in that** the component is designed as a screw-connection ring (56) which is screwed on to the clamping shank.

12. Tool holder according to Claim 11, **characterized in that** the annular shoulder is integrally formed on the clamping shank (18h, i, cc, dd, ee, gg) and the clamping shank is screw-connected to the region of the coupling formation.

13. Tool holder according to Claim 10, **characterized in that** the other end of the sleeve (20q) is supported on an annular shoulder of the tool (80) which is retained in the clamping formation.

14. Tool holder according to Claim 10, **characterized in that**, the annular shoulder (79r) is integrally formed on the clamping formation (14r), and the latter is fastened in an axially displaceable manner on the clamping shank (18r).

15. Tool holder according to Claim 9, **characterized in that** the sleeve (20v) has one of its axial ends supported on the coupling formation (12), in particular on a radially projecting annular collar (43) of the coupling formation (12), and has its other end supported in a frictionally fitting manner on the clamping shank (18v).

16. Tool holder according to one of Claims 1 to 15, **characterized in that** the sleeve (20o) comprises a plurality of sleeve shells (67, 68) which are arranged coaxially in relation to one another.

17. Tool holder according to Claim 16, **characterized in that** the sleeve shells (67, 68) butt against one another at least over a part of their axial length.

18. Tool holder according to Claim 16 or 17, **characterized in that** one of the sleeve shells (67, 68) is subjected to compressive loading and another of the sleeve shells (67, 68) is subjected to tensile loading.

19. Tool holder according to one of Claims 1 to 18, **characterized in that** formed radially between the sleeve (20p, aa) and the shank section (18) is an annular space (66) which is filled with a material which is subjected to pressure, in particular with a free-flowing material or a plastically deformable or elastic material.

20. Tool holder according to Claim 19, **characterized in that** the axial ends of the sleeve (20p, aa) are connected in a tension-resistant and sealed manner to the tool holder (10), in particular are friction-welded thereto, and **in that** the sleeve (20) encloses the clamping shank (18) with radial spacing and, in order to produce axial tensile bracing of the sleeve (20), material which is subjected to pressure, in particular elastic material is introduced between the clamping shank (18) and the sleeve (20).

21. Tool holder according to Claim 19 or 20, **characterized in that** pressure-changing means (76) are provided and can be used to change the pressure of the material in the annular space (66).

22. Tool holder according to one of Claims 1 to 23, **characterized in that** the shank section (18) or the sleeve (20) - insofar as this component is subjected to compressive loading - is supported axially via a damping element (59) relative to the other component, which is subjected to tensile loading.

23. Tool holder according to one of Claims 1 to 22, **characterized in that**, at least over part of its axial length, the sleeve (20v-z, bb) butts in a frictionally fitting manner against the circumference of the clamping shank (18).

24. Tool holder according to Claim 23, **characterized in that** the sleeve (20v-z, bb) has its two ends supported in an axially prestressed manner on the tool holder (10), that end of the sleeve (20) which is axially in the vicinity of the clamping formation (14) being retained on the clamping shank (18) such that it is fixed axially in a frictionally fitting manner, with press-fit action, in a friction-fit section (89).

25. Tool holder according to Claim 23 or 24, **characterized in that** the sleeve (20v-z, bb) and the clamping shank (18v) adapted to one another at least over part of the friction-fit section (89), are of slightly conical form.

26. Tool holder according to one of Claims 23 to 25, **characterized in that** the sleeve (20v-x, bb) is supported on the tool holder (10) such that it is prestressed axially under compressive loading, and it encloses the clamping shank (18) with radial spacing in the axial direction between the friction-fit section (89) and the end which is directed axially toward the coupling formation (12) and is supported on the tool holder (10).

27. Tool holder according to Claim 26, **characterized in that** in the axial direction between the friction-fit section (89) and the other end, which is supported on the tool holder (10v), at least one damping ring (94) made of an elastically compressible material is arranged between the circumference of the clamping shank (18) and the inner lateral surface of the sleeve (20v).

28. Tool holder according to one of Claims 1 to 27, **characterized in that** the clamping shank (18) merges into an annular shoulder (41) of the coupling formation (12) and the sleeve (20) is supported axially on the annular shoulder (41), and **in that** at least the end (32) of the sleeve (20b, c, f-s, u-x, aa-gg), this end being supported on the annular shoulder (41), is designed as a conical section which tapers axially away from the annular shoulder (41).

29. Tool holder according to Claim 28, **characterized in that** the conical section covers over at least one damping ring (94, 112).

30. Tool holder according to Claim 28 or 29, **characterized in that** the sleeve is prestressed axially under compressive loading.

31. Tool holder according to one of Claims 1 to 30, **characterized in that** the sleeve (20x) comprises an axially resilient zigzag-spring section (97).

32. Tool holder according to one of Claims 1 to 31, **characterized in that** the sleeve (20bb) has its two ends supported axially on the tool holder (10), there being arranged in the supporting path of one of the two ends of the sleeve (20bb) a supporting device (100) which can be moved axially relative to the tool holder (10) and has at least one supporting piston (103), which is guided in an axially displaceable manner in an associated pressure chamber (102) which contains a free-flowing or plastically deformable pressure medium (101), the pressure chamber (102) being assigned an adjusting element (104) for changing the pressure in the pressure medium (101).

33. Tool holder according to Claim 32, **characterized in that** the supporting piston (103) is designed as an annular piston which can be displaced axially in an annular space forming a pressure chamber (102) and on which one of the two ends of the sleeve (20bb) is supported or to which this end is connected.

34. Tool holder according to Claim 32 or 33, **characterized in that** the adjusting element (104) is a piston screw which acts on the pressure medium (101).

35. Tool holder according to one of Claims 32 to 34, **characterized in that** the other of the two ends of the sleeve (20bb) is fixed to the clamping shank (18), or is supported axially on an annular collar of the clamping shank (18), in particular on a securing ring (95bb) which is retained in a releasable manner on the clamping shank (18).

36. Tool holder according to one of Claims 1 to 35, **characterized in that**, at least over part of its axial length, the sleeve (20cc) encloses the shank section (18) with radial spacing to form an annular space (111), and arranged in a radially prestressed manner in the annular space (111) is an annular damping element (112) which is in surface abutment against the inner circumferential surface (113) of the sleeve and the outer circumferential surface (29cc) of the shank section (18cc).

37. Tool holder according to Claim 36, **characterized in that** the damping element (112) consists of elastically compressible material, and **in that** the annular space (111) is bounded axially by annular shoulders (115, 117), between which the damping element (112) is braced axially in order to produce radial prestressing.

38. Tool holder according to Claim 37, **characterized in that** one of the annular shoulders (117dd) can be displaced axially in order to change the prestressing of the damping element (112).

39. Tool holder according to Claim 38, **characterized in that** the axially displaceable annular shoulder (117dd) is formed by an axially displaceable screw-connection arrangement (119) which is retained on the coupling formation (12dd).

40. Tool holder according to Claims 36 to 39, **characterized in that** the annular space (111) is conical.

41. Tool holder according to Claim 40, **characterized in that** the damping element (112) is prestressed in the direction of the tapering of the conical annular space (111).

42. Tool holder according to one of Claims 1 to 41, **characterized in that**, at least over part of its axial length, the sleeve (20m, n, o) encloses the shank section (18) with radial spacing to form an annular space, and **in that** an absorption-mass body (65m, n, o) is arranged on the shank section (18) in the annular space.

43. Tool holder according to Claim 42, **characterized in that** the absorption-mass body (65m, n, o) can be displaced along the shank section (18).

44. Tool holder according to one of Claims 1 to 43, **characterized in that** the two components - clamping shank and bracing arrangement - consist of different materials.

45. Tool holder according to Claim 44, **characterized in that** one of the components, in particular the sleeve (20), at least in its region which transmits the axial bracing force, consists of hard metal or heavy metal or a metal matrix composite material or ceramic or plastic, in particular glass-fiber-reinforced or carbon-fiber-reinforced plastic.

46. Tool holder according to one of Claims 1 to 45, **characterized in that** one of the two components - clamping shank and bracing arrangement - is supported on the other of the two components via at least one joint (22, 22a, h, i, q, r, s, v - z, aa - gg, 24, 24a - i, n, q, r, v - z, aa - gg) which transmits the axial bracing force.

47. Tool holder according to Claim 46, **characterized in that** the joint (24v - z, bb) is provided between two circumferential surfaces of the two components which butt against one another with radial press-fit action.

48. Tool holder according to Claim 46 or 47, **characterized in that** the joint (22, 22a, h, i, q, r, s, v - z, aa - dd, 24, 24a - i, n, q, r, w - z, aa - gg) is provided between two axially abutting surfaces of the two components.

49. Tool holder according to one of Claims 46 to 48, **characterized in that** a damping-material layer (59; 59t) is arranged between the two joint-forming surfaces.

50. Tool holder according to one of Claims 46 to 49, **characterized in that** at least one of the two axial ends of the sleeve-forming component forms one of the abutting surfaces of the joint, and a circumferential surface (120) is integrally formed, or fitted, on the other of the two components and centers the sleeve radially in the region of this end.

51. Tool holder according to Claim 50, **characterized in that** the joint-forming surfaces are provided in each case at the two ends of the sleeve, and the sleeve is centered radially in the region of the two ends by circumferential surfaces of the other component.

52. Tool holder according to Claim 50 or 51, **characterized in that** the circumferential surface of the other component butts with radial press-fit action against a circumferential surface of the sleeve.

53. Tool holder according to one of Claims 50 to 52, **characterized in that** the circumferential surface of the other component encloses the sleeve in a radially outward direction in the region of at least one of its axial ends.

54. Tool holder according to Claim 53, **characterized in that** at least that end of the sleeve which is adjacent to the clamping formation is enclosed in the radially outward direction by the circumferential surface of the other component.

55. Tool holder according to Claim 53 or 54, **characterized in that that** circumferential surface of the other of the two components which encloses the sleeve (20ff) in the radially outward direction in the region of at least one of its ends, in particular in the region of its end (26ff), which is adjacent to the clamping formation (14ff), is formed by a ring (119ff) which covers over the joint axially and also encloses the other component in the radially outward direction.

## Revendications

1. Porte-outil pour un outil rotatif autour d'un axe de rotation (D), en particulier un outil d'alésage, de fraisage, de friction ou de rectification, comprenant une tige de serrage qui comporte dans sa première zone d'extrémité une configuration de serrage (14) en vue de la fixation coaxiale de l'outil et dans son autre zone d'extrémité une configuration d'accouplement (12) en vue de l'accouplement coaxial avec une machine-outil, moyennant quoi un dispositif de bridage est relié à la tige de serrage, lequel exerce dans un segment de bridage axial de la tige de serrage disposé en direction axiale entre la configuration de serrage (14) et la configuration d'accouplement (12) une force de bridage avec un composant de force de bridage agissant en direction axiale sur la tige de serrage, et moyennant quoi dans le segment de bridage des composants formant la tige de serrage et le dispositif de bridage au moins le dispositif de bridage est configuré comme un manchon (20b, c, f-s, u-x, z, aa-gg) qui entoure la tige de serrage (18) de façon coaxiale et moyennant quoi la configuration de serrage (14) dépasse du manchon,
**caractérisé en ce que**
le manchon (20b, c, f-s, u-x, z, aa-gg) présente une forme au moins pratiquement conique et un diamètre externe ou/et interne s'agrandissant vers son extrémité adjacente à la configuration d'accouplement (12), et la configuration de serrage (14) est formée pour une fixation par ajustement fretté de l'outil.

2. Porte-outil selon la revendication 1, **caractérisé en ce que** le manchon (20b, c, f, k-p, s, u, z, aa) s'appuie contre le porte-outil (10) avec une limite de charge sous l'effort de traction, et la tige de serrage comprend un segment de tige (18) qui relie la configuration d'accouplement (12) avec une limite de charge sous compression à la configuration de serrage (14).

3. Porte-outil selon la revendication 2, **caractérisé en ce que** le manchon (20) saisit par l'arrière à son extrémité (26) proche de la configuration de serrage (14) un épaulement annulaire (30b, c, f, k-p, s, u, z, aa) opposé à la configuration d'accouplement (12) de la tige de serrage, et est vissé à son autre extrémité (32) sur le porte-outil, ou est solidement relié au porte-outil en particulier par assemblage non détachable, en particulier par soudage.

4. Porte-outil selon la revendication 3, **caractérisé en ce que** le manchon (20) comporte à l'autre extrémité (32) une collerette annulaire (34) dépassant radialement vers l'extérieur, laquelle est vissée contre un épaulement annulaire (43) s'étendant radialement vers l'extérieur de la configuration d'accouplement (12).

5. Porte-outil selon la revendication 4, **caractérisé en ce que** le manchon (20f) comprend à l'autre extrémité (32) un filet interne (44f) qui est vissé sur un filet externe (46f) de la tige de serrage.

6. Porte-outil selon la revendication 3, **caractérisé en ce que** le manchon (20b, c, n, s) saisit par l'arrière à son extrémité (26) proche de la configuration de serrage (14) un épaulement annulaire (33b, c, n) opposé à la configuration d'accouplement (12) du porte-outil dans la zone de la configuration de serrage (14), ou est relié d'un seul tenant au porte-outil, et est relié à son autre extrémité (32b, c, n, s) d'un seul tenant au porte-outil, en particulier à une collerette annulaire (43) ressortant radialement vers l'extérieur de la configuration d'accouplement (12), et **en ce que** la tige de serrage s'appuie dans la zone de bridage par ajustement de force et de forme contre une surface fixe vers la configuration d'accouplement (12) du porte-outil.

7. Porte-outil selon la revendication 3, **caractérisé en ce que** le manchon (20s) est relié fixement d'un seul tenant, en particulier de façon intégrante non seulement à la configuration de serrage (14s), mais aussi à la configuration d'accouplement (12s), et la zone de la configuration de serrage s'appuie via le segment de tige (18s) contre la zone de la configuration d'accouplement (12s).

8. Porte-outil selon la revendication 7, **caractérisé en ce que** le segment de tige (18s) est configuré comme un composant séparé de la configuration de serrage (14s) et de la configuration d'accouplement (12s).

9. Porte-outil selon la revendication 1, **caractérisé en ce que** le manchon (20g, h-k, q, r, u-x, bb, cc, dd, ee, ff, gg) s'appuie contre le porte-outil au niveau de ses extrémités (26, 32) avec une limite de charge sous compression, et la tige de serrage comprend un segment de tige (18) qui relie la configuration d'accouplement (12) avec une limite de charge sous l'effort de traction à la configuration de serrage (14).

10. Porte-outil selon la revendication 9, **caractérisé en ce que** le manchon (20g, h, i, q, r, w, x, cc, dd, ee, ff, gg) s'appuie avec une de ses extrémités axiales contre la configuration d'accouplement (12), en particulier contre une collerette annulaire (43) dépassant radialement de la configuration d'accouplement (12), et s'appuie avec son autre extrémité contre un épaulement annulaire d'un composant axialement vissable par rapport à la configuration d'accouplement ou axialement réglable par une liaison par ajustement serré (18h, i, cc, dd, ee, gg, 56, 56n, 58, 80, 95).

11. Porte-outil selon la revendication 10, **caractérisé en ce que** le composant est configuré comme un anneau fileté (56) vissé sur la tige de serrage.

12. Porte-outil selon la revendication 11, **caractérisé en ce que** l'épaulement annulaire est venu de forme sur la tige de serrage (18h, i, cc, dd, ee, gg), et la tige de serrage est vissée avec la zone de la configuration d'accouplement.

13. Porte-outil selon la revendication 10, **caractérisé en ce que** l'autre extrémité du manchon (20q) s'appuie contre un épaulement annulaire de l'outil (80) fixé dans la configuration de serrage.

14. Porte-outil selon la revendication 10, **caractérisé en ce que** l'épaulement annulaire (79r) est venu de forme sur la configuration de serrage (14r), et celui-ci est fixé en pouvant être déplacé axialement contre la tige de serrage (18r).

15. Porte-outil selon la revendication 9, **caractérisé en ce que** le manchon (20v) s'appuie avec une de ses extrémités axiales contre la configuration d'accouplement (12), en particulier une collerette annulaire (43) dépassant radialement de la configuration d'accouplement (12), et s'appuie avec son autre extrémité par ajustement de friction contre la tige de serrage (18v).

16. Porte-outil selon une des revendications 1 à 15, **caractérisé en ce que** le manchon (20o) comprend plusieurs revêtements de manchon (67, 68) disposés coaxialement les uns par rapport aux autres.

17. Porte-outil selon la revendication 16, **caractérisé en ce que** les revêtements de manchon (67, 68) sont adjacents les uns aux autres au moins dans un segment partiel de leur longueur axiale.

18. Porte-outil selon la revendication 16 ou 17, **caractérisé en ce qu'**un des revêtements de manchon (67, 68) est soumis à la compression, et un autre des revêtements de manchon (67, 68) est soumis à la traction.

19. Porte-outil selon une des revendications 1 à 18, **caractérisé en ce qu'**un espace annulaire (66) est formé radialement entre le manchon (20p, aa) et le segment de tige (18), lequel espace annulaire est rempli d'un matériau sous pression, en particulier un matériau apte à l'écoulement ou un matériau plastiquement déformable ou élastique.

20. Porte-outil selon la revendication 19,
**caractérisé en ce que** les extrémités axiales du manchon (20p, aa) sont reliées de façon résistante à la traction et étanche au porte-outil (10), en particulier sont soudées par friction,
**en ce que** le manchon (20) entoure à distance radiale la tige de serrage (18), et un matériau soumis à pression, en particulier un matériau élastique, est introduit pour la production d'une contrainte de traction axiale du manchon (20) entre la tige de serrage (18) et le manchon (20).

21. Porte-outil selon la revendication 19 ou 20, **caractérisé en ce que** des moyens de changement de pression (76) sont prévus, au moyen desquels la pression du matériau peut être modifiée dans l'espace annulaire (66).

22. Porte-outil selon une des revendications 1 à 23, **caractérisé en ce que** le segment de tige (18) ou le manchon (20) - dans la mesure où ce composant est soumis à la pression - s'appuie axialement via un élément amortisseur (59) par rapport à l'autre composant soumis à la traction.

23. Porte-outil selon une des revendications 1 à 22,
**caractérisé en ce que** le manchon (20v-z, bb) repose au moins sur une zone partielle de sa longueur axiale par ajustement par friction sur le pourtour de la tige de serrage (18).

24. Porte-outil selon la revendication 23,
**caractérisé en ce que** le manchon (20v-z, bb) avec ses deux extrémités s'appuie sur le porte-outil (10) en étant précontraint axialement, moyennant quoi l'extrémité du manchon (20) axialement proche de la configuration de serrage (14) dans un segment d'ajustement par friction (89) est fixée axialement par ajustement par friction dans l'ajustement serré contre la tige de serrage (18).

25. Porte-outil selon la revendication 23 ou 24,
**caractérisé en ce que** le manchon (20v-z, bb) et la tige de serrage (18v) présentent une forme légèrement conique et sont adaptés l'un à l'autre au moins dans une partie du segment d'ajustement par friction (89).

26. Porte-outil selon une des revendications 23 à 25,
**caractérisé en ce que** le manchon (20v-x, bb) s'appuie sur le porte-outil (10) en étant précontraint axialement sous pression, et entoure axialement, entre le segment d'ajustement par frottement (89) et l'extrémité dirigée axialement vers la configuration d'accouplement (12) appuyée sur le porte-outil (10), la tige de serrage (18) avec une distance radiale.

27. Porte-outil selon la revendication 26,
**caractérisé en ce qu'**axialement entre le segment d'ajustement par friction (89) et l'autre extrémité appuyée sur le porte-outil (10v) est disposé au moins un anneau amortisseur (94) formé d'un matériau élastiquement comprimable entre le pourtour de la tige de serrage (18) et le revêtement interne du manchon (20v).

28. Porte-outil selon une des revendications 1 à 27,
**caractérisé en ce que** la tige de serrage (18) dépasse dans un épaulement annulaire (41) de la configuration d'accouplement (12), et le manchon (20) s'appuie axialement contre l'épaulement annulaire (41), et **en ce qu'**au moins l'extrémité (32) s'appuyant sur l'épaulement annulaire (41) du manchon (20b, c, f-s, u-x, aa-gg) est configurée comme un segment conique qui se rétrécit axialement en s'éloignant de l'épaulement annulaire (41).

29. Porte-outil selon la revendication 28,
**caractérisé en ce que** le segment conique recouvre au moins un anneau amortisseur (94, 112).

30. Porte-outil selon la revendication 28 ou 29,
**caractérisé en ce que** le manchon est précontraint axialement sous pression.

31. Porte-outil selon une des revendications 1 à 30,
**caractérisé en ce que** le manchon (20x) comprend un segment de rondelle ondulée à ressort axial (97).

32. Porte-outil selon une des revendications 1 à 31,
**caractérisé en ce que** le manchon (20bb) s'appuie avec ses deux extrémités axialement contre le porte-outil (10), moyennant quoi dans le parcours d'appui d'une des deux extrémités du manchon (20bb) est disposée une installation d'appui (100) axialement mobile par rapport au porte-outil (10), laquelle comprend au moins un piston d'appui (103) qui est dirigé de façon axialement coulissante dans une chambre de pression (102) contenant un milieu de pression (101) apte à l'écoulement ou plastiquement déformable associé à celle-ci, moyennant quoi un élément de réglage (104) est associé à la chambre de pression (102) pour modifier la pression dans le milieu de pression (101).

33. Porte-outil selon la revendication 32,
**caractérisé en ce que** le piston d'appui (103) est configuré comme un piston annulaire coulissant axialement dans un espace annulaire formant la chambre de pression (102), contre lequel l'une des deux extrémités du manchon (20bb) est appuyée ou est reliée à celui-ci.

34. Porte-outil selon la revendication 32 ou 33,
**caractérisé en ce que** l'élément de réglage (104) est une vis de piston agissant sur le milieu de pression (101).

35. Porte-outil selon une des revendications 32 à 34,
**caractérisé en ce que** l'autre des deux extrémités du manchon (20bb) est reliée fixement à la tige de serrage (18) ou sur une collerette annulaire de la tige de serrage (18), en particulier s'appuie axialement contre l'anneau de fixation (95bb) maintenu de façon détachable sur la tige de serrage (18).

36. Porte-outil selon une des revendications 1 à 35, **caractérisé en ce que** le manchon (20cc) entoure le segment de tige (18) au moins dans une zone partielle de sa longueur axiale en formant un espace annulaire (111) avec une distance radiale, et dans l'espace annulaire (111) est disposé de façon radialement précontrainte un élément amortisseur (112) annulaire affleurant sur la surface périphérique interne (113) du manchon et la surface périphérique externe (29cc) du segment de tige (18cc).

37. Porte-outil selon la revendication 36, **caractérisé en ce que** l'élément amortisseur (112) est en matériau élastiquement comprimable, et **en ce que** l'espace annulaire (111) est axialement délimité par des épaulements annulaires (115, 117), entre lesquels l'élément amortisseur (112) est bridé axialement en vue de produire la précontrainte radiale.

38. Porte-outil selon la revendication 37, **caractérisé en ce qu'**un des épaulements annulaires (117dd) est axialement déplaçable pour la modification de la précontrainte de l'élément amortisseur (112).

39. Porte-outil selon la revendication 38, **caractérisé en ce que** l'épaulement annulaire axialement déplaçable (117dd) est formé par un ensemble à vis (119) axialement déplaçable maintenu sur la configuration d'accouplement (12dd).

40. Porte-outil selon la revendication 36 à 39, **caractérisé en ce que** l'espace annulaire (111) a une forme conique.

41. Porte-outil selon la revendication 40, **caractérisé en ce que** l'élément amortisseur (112) est précontraint en direction du rétrécissement de l'espace annulaire conique (111).

42. Porte-outil selon une des revendications 1 à 41, **caractérisé en ce que** le manchon (20m, n, o) entoure le segment de tige (18) au moins dans une zone partielle de sa longueur axiale en formant un espace annulaire avec une distance radiale, et **en ce qu'**est disposé un corps massique d'amortissement (65m, n, o) sur le segment de tige (18) dans l'espace annulaire.

43. Porte-outil selon la revendication 42, **caractérisé en ce que** le corps massique d'amortissement (65m, n, o) est déplaçable le long du segment de tige (18).

44. Porte-outil selon une des revendications 1 à 43, **caractérisé en ce que** les deux composants - tige de serrage et dispositif de bridage - sont formés de matériaux différents.

45. Porte-outil selon la revendication 44, **caractérisé en ce qu'**un des composants, en particulier le manchon (20), est formé au moins dans sa zone transmettant la force de bridage axiale de métal dur ou de métal lourd ou d'un matériau composite à base de matrice métallique ou de céramique ou de matière plastique, en particulier du plastique à base de fibres de verre ou de fibres de carbone.

46. Porte-outil selon une des revendications 1 à 45, **caractérisé en ce qu'**un des deux composants - tige de serrage et dispositif de bridage - s'appuie via au moins un joint (22, 22a, h, i, q, r, s, v - z, aa-gg, 24, 24a - i, n, q, r, v - z, aa - gg) transmettant la force de bridage axiale contre l'autre des deux composants.

47. Porte-outil selon la revendication 46, **caractérisé en ce que** le joint (24v - z, bb) est prévu entre deux surfaces périphériques, adjacentes l'une à l'autre dans l'ajustement serré radial, des deux composants.

48. Porte-outil selon la revendication 46 ou 47, **caractérisé en ce que** le joint (22, 22a, h, i, q, r, s, v - z, aa-dd, 24, 24a - i, n, q, r, w - z, aa - gg) est prévu entre deux surfaces axialement adjacentes l'une à l'autre des deux composants.

49. Porte-outil selon une des revendications 46 à 48, **caractérisé en ce que** entre les deux surfaces formant le joint est disposée une couche de matériau d'amortissement (59 ; 59t).

50. Porte-outil selon une des revendications 46 à 49, **caractérisé en ce qu'**au moins une des deux extrémités frontales axiales des composants formant le manchon forme une des surfaces adjacentes du joint, et contre l'autre des deux composants est venue de forme ou est appliquée une surface périphérique (120) qui centre radialement le manchon dans la zone de cette extrémité frontale.

51. Porte-outil selon la revendication 50, **caractérisé en ce que** sur les deux extrémités frontales du manchon sont prévues respectivement les surfaces formant le joint, et le manchon dans la zone des deux extrémités frontales est centré radialement par les surfaces périphériques des autres composants.

52. Porte-outil selon la revendication 50 ou 51, **caractérisé en ce que** la surface périphérique des autres composants repose dans l'ajustement serré radial contre une surface périphérique du manchon.

53. Porte-outil selon une des revendications 50 à 52, **caractérisé en ce que** la surface périphérique des autres composants entoure radialement vers l'extérieur le manchon dans la zone au moins d'une de ses extrémités frontales axiales.

54. Porte-outil selon la revendication 53, **caractérisé en ce que** la surface périphérique des autres composants entoure radialement vers l'extérieur au moins l'extrémité frontale voisine de la configuration de serrage du manchon.

55. Porte-outil selon la revendication 53 ou 54, **caractérisé en ce que** la surface périphérique de l'autre des deux composants entourant radialement vers l'extérieur le manchon (20ff) dans la zone d'au moins une de ses extrémités frontales, en particulier dans la zone de son extrémité frontale (26ff) voisine de la configuration de serrage (14ff) est formée par un anneau (119ff) recouvrant axialement le joint, entourant également radialement vers l'extérieur l'autre composant.
